(19) Europäisches Patentamt
European Patent Office
Office européen des brevets

(11) **EP 3 564 707 B1**

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(51) Int Cl.:
*G01S 11/02* *(2010.01)*      *G01S 13/84* *(2006.01)*

(21) Anmeldenummer: **19166622.1**

(22) Anmeldetag: **01.04.2019**

(54) **VERFAHREN UND SYSTEM ZUR HOCHAUFLÖSENDEN ENTFERNUNGS- UND GESCHWINDIGKEITSMESSUNG**

METHOD AND SYSTEM FOR HIGH RESOLUTION RANGE AND VELOCITY MEASUREMENTS

PROCÉDÉ ET SYSTÈME DE MESURE DE DISTANCE ET DE VITESSE À HAUTE RÉSOLUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2018 EP 18170949**
**12.05.2018 EP 18171965**

(43) Veröffentlichungstag der Anmeldung:
**06.11.2019 Patentblatt 2019/45**

(73) Patentinhaber: **Lambda: 4 Entwicklungen GmbH**
**22299 Hamburg (DE)**

(72) Erfinder: **REIMANN, Rönne**
**22769 Hamburg (DE)**

(74) Vertreter: **Raffay & Fleck**
**Patentanwälte**
**Grosse Bleichen 8**
**20354 Hamburg (DE)**

(56) Entgegenhaltungen:
**EP-A1- 2 196 823          WO-A1-03/081516**
**DE-A1-102009 060 592**

**Beschreibung**

Die vorliegende Erfindung betrifft ein Verfahren und ein System zur hochauflösenden Entfernungs- und/oder Geschwindigkeitsmessung mittels elektromagnetischer Wellen.

Systeme und Verfahren zur Entfernungsmessung sind zahlreich bekannt, beispielsweise aus der EP 21 96823.

So offenbart die DE 10 2009 060 592 A1 ein Entfernungsmessungssystem, welches mittels der Phasen von gesendeten und empfangenen Signalen, die jeweils aufeinander aufbauende Frequenzwerte aufweisen, eine Entfernung zwischen Sender und Empfänger bestimmt.

Aufgabe der vorliegenden Erfindung ist es, derartige Systeme und Verfahren dahin gehend weiter zu entwickeln, dass Entfernungsmessungen auch in komplizierten Multipathumgebungen und/oder bei bewegten Objekten zuverlässig, einfach, schnell, mit geringer Bandbreite und mit hoher Genauigkeit möglich sind. Auch ist es Aufgabe, die Bestimmung von, insbesondere niedrigen, relativen Geschwindigkeiten bei beschränkter Bandbreite der Signalübertragung und/oder der Analyse mit hoher Genauigkeit zu bestimmen, möglichst gemeinsam mit der Entfernung.

Dies wird gelöst durch ein Verfahren nach Anspruch 1 und ein System nach Anspruch 15. Die Unteransprüche geben vorteilhafte Weiterbildungen an.

Insbesondere wird das erfindungsgemäße Verfahren mit einem erfindungsgemäßen System durchgeführt und/oder ist das erfindungsgemäße System eingerichtet, ein erfindungsgemäßes Verfahren durchzuführen.

Gelöst wird die Aufgabe durch ein Verfahren zur hochauflösenden Bestimmung einer Entfernung und/oder einer relativen Geschwindigkeit zwischen einem ersten Objekt und einem zweiten Objekt, mittels zwischen dem ersten und dem zweiten Objekt übertragender elektromagnetischer Signale, umfassend vielfaches Ausführen der folgenden Schritte a bis d mit unterschiedlichen ersten und unterschiedlichen zweiten Frequenzen:

> a. Senden eines ersten Signals mit einer ersten Frequenz vom ersten Objekt aus mit mindestens einer ersten Antenne,
>
> b. Empfangen des ersten Signals am zweiten Objekt mit mindestens einer zweiten Antenne,
>
> c. Senden eines zweiten Signals mit einer zweiten Frequenz vom zweiten Objekt aus mit mindestens einer, insbesondere der mindestens einen zweiten, Antenne, und
>
> d. Empfangen des zweiten Signals am ersten Objekt mit mindestens einer, insbesondere der mindestens einen ersten, Antenne.

Dabei werden bei den vielfachen Ausführungen, die insbesondere mindestens ein fünffaches Ausführen darstellen, insbesondere mindestens zwei, insbesondere mindestens fünf, unterschiedliche zweite Frequenzen und insbesondere mindestens zwei, insbesondere mindestens fünf, unterschiedliche erste Frequenzen eingesetzt. Die mindestens zwei, insbesondere mindestens fünf, insbesondere die ersten und/oder zweiten Frequenzen liegen insbesondere im Bereich von 400 MHz bis 8 GHz und/oder innerhalb einer Bandbreite von maximal 200 MHz, insbesondere maximal 100MHz. Der kleinste Abstand zwischen zwei, insbesondere allen, der mindestens zwei, insbesondere mindestens fünf, insbesondere den, frequenzmäßig und/oder in der zeitlichen Abfolge benachbarten ersten Frequenzen beträgt insbesondere mindestens 25kHz. Der kleinste Abstand zwischen je zwei, insbesondere allen, der mindestens zwei, insbesondere mindestens fünf, insbesondere den, frequenzmäßig und/oder in der zeitlichen Abfolge benachbarten zweiten Frequenzen beträgt insbesondere mindestens 25kHz. Der größte Abstand zwischen zwei, insbesondere allen, der mindestens zwei, insbesondere mindestens fünf, insbesondere den, frequenzmäßig und/oder in der zeitlichen Abfolge benachbarten ersten Frequenzen beträgt insbesondere maximal 10MHz. Der größte Abstand zwischen zwei, insbesondere allen, der mindestens zwei, insbesondere mindestens fünf, insbesondere den, frequenzmäßig und/oder in der zeitlichen Abfolge benachbarten zweiten Frequenzen beträgt insbesondere maximal 10MHz.

Insbesondere wird das Verfahren so durchgeführt, dass die Zeit zwischen Schritt b und Schritt c mindestens 5 mal so lang ist wie die Zeit zwischen Schritt a und Schritt b und/oder dass die Zeit zwischen Schritt c und Schritt d mindestens 5 mal so lang ist wie die Zeit zwischen Schritt b und Schritt c.

Insbesondere wird das Verfahren so durchgeführt, dass die Zeit zwischen Schritt d und Schritt a der folgenden Ausführung mindestens 5 mal so lang ist wie die Zeit zwischen Schritt a und Schritt b und/oder die Zeit zwischen Schritt d und Schritt a der folgenden Ausführung mindestens 5 mal so lang ist wie die Zeit zwischen Schritt c und Schritt d.

Die vielfachen Ausführungen können dabei nacheinander und/oder vollständig oder teilweise zeitgleich durchgeführt werden. Insbesondere ist ihr Abstand kleiner gleich einer Sekunde, insbesondere kleiner gleich 100ms. Insbesondere werden mindestens fünf Ausführungen der Schritte a bis d innerhalb von maximal fünf Sekunden, insbesondere innerhalb von maximal 100ms, durchgeführt

Das Verfahren beinhaltet auch das Bereitstellen mindestens einer aus oder mittels mindestens einer ermittelten Phasenlage des empfangen ersten Signals ermittelten ersten Phaseninformation je erstem Signal oder je Ausführung der Schritte a bis d und das Bereitstellen mindestens einer aus oder mittels mindestens einer ermittelten Phasenlage des empfangen zweiten Signals ermittelten zweiten Phaseninformation je zweitem Signal oder je Ausführung der Schritte a bis d.

Zur Ermittlung der Phasenlage wird das empfangene Signal insbesondere mit oder auf eine(r) Zwischenfrequenz gemischt. Die Zwischenfrequenz beträgt insbesondere 0 Hz.

Das Verfahren beinhaltet auch das Bilden einer Messwertmatrix aus den ersten und zweiten Phaseninformationen und je erster und/oder zweiter Phaseninformation oder je Ausführung der Schritte a bis d mindestens einer Amplitude. Vorteilhafterweise ist die Messwertmatrix gebildet sowohl aus den ersten und zweiten Phaseninformationen als auch aus je erster und/oder zweiter Phaseninformation oder je Ausführung der Schritte a bis d mindestens einer Amplitude.

Mit Vorteil wird jede erste Phaseninformation gewonnen durch Berechnen einer ersten theoretischen Phasenlage am zweiten Objekt zu einem ersten fiktiven Zeitpunkt je erstem Signal und/oder je Ausführung der Schritte a bis d zwischen jeweiligem ersten Signal gemessen mit einer der zweiten Antennen und jeweiligen zweitem Signal gemessen mit einer der ersten Antennen und/oder wird jede zweite Phaseninformation gewonnen durch Berechnen einer zweiten theoretischen Phasenlage am ersten Objekt zu einem zweiten fiktiven Zeitpunkt je erstem Signal zwischen jeweiligen erstem Signal gemessen mit einer der zweiten Antennen und jeweiligen zweitem Signal gemessen mit einer der ersten Antennen.

Dabei bilden die jeweils verwendete erste Antenne und die jeweils verwendete zweite Antenne eine Antennenkombination und ist insbesondere jede theoretische Phasenlage der Antennenkombination zugeordnet, mittels derer sie erfasst wurde. Mit Vorteil wird mindestens für eine Auswahl der möglichen Antennenkombinationen der mindestens einen ersten und der mindestens einen zweiten Antenne je Ausführung der Schritte a bis d eine erste theoretische Phasenlage und/oder zweite theoretische Phasenlage als Phaseninformation berechnet und insbesondere in der Messwertmatrix beinhaltet und/oder zu dessen Erstellung verwendet. Insbesondere beinhaltet die Auswahl mindestens fünf Antennenkombinationen.

Erster und zweiter fiktiver Zeitpunkt liegen bevorzugt nah beieinander, insbesondere nicht weiter auseinander als $100\mu s$, insbesondere nicht weiter auseinander als $20\mu s$, insbesondere nicht weiter auseinander als $2\mu s$. Sie sind insbesondere möglichst identisch, also so identisch, wie es die Genauigkeit des verwendeten Systems und/oder der verwendeten Bauteile zulässt, und/oder identisch.

Dies erfolgt insbesondere mittels Bestimmung der Frequenzen des jeweiligen ersten Signals und des jeweiligen zweiten Signals am zweiten Objekt und/oder der Frequenzdifferenz zwischen dem jeweiligen ersten Signal und dem jeweiligen zweiten Signal am zweiten Objekt und/oder mittels Bestimmung der Frequenzen des jeweiligen zweiten Signals und des jeweiligen ersten Signals am ersten Objekt und/oder der Frequenzdifferenz zwischen dem jeweiligen zweiten Signal und dem jeweiligen ersten Signal am ersten Objekt.

Insbesondere liegen der erste und/oder zweite fiktive Zeitpunkt und/oder liegt der fiktive Zeitpunkt als der fiktive Zeitpunkt, wenn erster und zweiter fiktiver Zeitpunkt identisch sind, zwischen den Phasenmessungen am ersten und zweiten Objekt, insbesondere mittig. Dadurch kann die Auswirkungen der Ungenauigkeit in der Frequenzmessungen und/oder Frequenzdifferenzmessungen minimiert werden.

Insbesondere werden als Phaseninformationen Phasenlagen verwendet oder beinhaltet. Insbesondere wird die aufsummierte Phasenverschiebung und/oder Phasendifferenz der Übertragungen des ersten Signals vom ersten zum zweiten Objekt und des zweiten Signals vom zweiten Objekt zum ersten Objekt oder die Hälfte der aufsummierten Phasenverschiebung und/oder der Differenz oder die Summe der jeweiligen ersten und zweiten theoretischen Phasenlage oder deren Hälfte als Phaseninformation, insbesondere der Übertragung der Signale jeweils zwischen einer der ersten und einer der zweiten Antennen, verwendet und/oder die Phaseninformation zusammen mit einer Amplitude, insbesondere des empfangenen ersten oder zweiten Signals, und/oder normierten Amplitude des empfangenen ersten oder zweiten Signals insbesondere der Übertragung der Signale jeweils zwischen einer der ersten und einer der zweiten Antennen, verwendet, um mindestens eine komplexe Messzahl der Messwertmatrix je Ausführung der Schritte a bis d zu bilden.

Dies erfolgt insbesondere derart, dass als Messzahl die folgende Formel verwendet wird

$$(\text{Amplitude} \times \text{konstantem Faktor})\, e^{i(\text{1. Phasenverschiebung} + \text{2. Phasenverschiebung}) \times 0{,}5}$$

Insbesondere werden die Messwerte, insbesondere wie soeben beschrieben gebildete komplexe Messzahlen, der ersten und/oder zweiten Antennen, insbesondere jeweils einer Kombination einer der ersten und einer der zweiten Antennen, jeweils in einer Zeile eines Messwertobjekt in Form einer Messwertmatrix angeordnet, wobei die unterschiedlichen Zeilen durch Messwerte, insbesondere wie soeben beschrieben gebildete komplexe Messzahlen, der Antenne und/oder Antennenkombinationen jeweils einer Ausführung der Schritte a bis d gefüllt werden und die unterschiedlichen Spaltenwerte einer Zeile jeweils durch die Messwerte, insbesondere wie soeben beschrieben gebildete komplexe Messzahlen, jeweils einer ersten und/oder zweiten Antenne und/oder Antennenkombinationen gebildet werden.

Führt man beispielsweise die Schritte a bis d n-mal durch und verwendet e erste und f zweite Antennen, so können e x f Antennenkombinationen gebildet werden und somit bei jeder Durchführung der Schritte a bis d insbesondere e x f komplexe Messzahlen gewonnen werden, die oder eine Auswahl derer insbesondere in den Spalten einer Zeile der Messwertmatrix angeordnet werden, wobei insbesondere maximal e x f Spalten vorhanden sind. Insgesamt lässt sich durch die n-fache Durchführung insbesondere eine Messwertmatrix mit n Zeilen und maximal e x f Spalten gewinnen.

Mit besonderem Vorteil ist dabei jede komplexe Messzahl eines ersten und eines zweiten Signals einer Ausführung der Schritte a bis d einer Antennenkombination einer ersten und einer zweiten Antenne zugeordnet und/oder gebildet nach folgender Rechenvorschrift

$$c1 \ x \ A \ e^{i \ x \ (phi1 + phi2) \ x \ c2}$$

wobei A eine gemessene Amplitude, insbesondere die Amplitude der Messung des jeweiligen ersten und/oder des jeweiligen zweiten Signals an der ersten und/oder der zweiten Antenne der jeweiligen Antennenkombination ist und/oder diese beinhaltet, beispielsweise als Summe,
phi1 die erste theoretische Phasenlage des jeweiligen ersten und des jeweiligen zweiten Signals der jeweiligen Antennenkombination und/oder Phasenverschiebung der Übertragung vom ersten zum zweiten Objekt und
phi2 die zweite theoretische Phasenlage des jeweiligen zweiten und des jeweiligen ersten Signals der jeweiligen Antennenkombination und/oder Phasenverschiebung der Übertragung vom zweiten zum ersten Objekt und c1 und c2 Konstanten, insbesondere identisch für alle Messwertzahlen einer Messwertmatrix, sind.

Die Messwertmatrix ist also insbesondere gebildet aus den Zahlen oder einer Auswahl der Zahlen

$$M_{j,xy} = c1 \ x \ A(AKxy, \ j) \ e^{i \ x \ (phi1(AKxy, \ j) + phi2(AKxy, \ j)) \ x \ c2}$$

wobei $M_{j,xy}$ die Zahl in der j ten Zeile ist und $0 < j <= n$ und

AKxy die Antennenkombination der e ten ersten und f ten zweiten Antenne ist,

$$mi \ 0 < x <= e \ und \ 0 < y <= f$$

und

phi1 (AKxy, j) die erste theoretische Phasenlage der Antennenkombination AKxy der j ten Ausführung der Schritte a bis d und/oder Phasenverschiebung der Übertragung vom ersten zum zweiten Objekt der j ten Ausführung der Schritte a bis d unter Nutzung der der Antennenkombination AKxy und

phi2(AKxy, j) die zweite theoretische Phasenlage der Antennenkombination AKxy der j ten Ausführung der Schritte a bis d und/oder Phasenverschiebung der Übertragung vom zweiten zum ersten Objekt der j ten Ausführung der Schritte a bis d unter Nutzung der der Antennenkombination AKxy und

c1 und c2 Konstanten, insbesondere identisch für alle Messwertzahlen einer Messwertmatrix, sind. Dabei ist die Auswahl insbesondere derart, dass alle Zahlen $M_{j,xy}$ einer Auswahl von Antennenkombinationen AKxy nicht verwendet werden. Insbesondere gibt j die Zeile und xy die Spalte der Messwertmatrix an, wobei insbesondere xy von nicht verwendeten AKxy übersprungen werden und/oder die entsprechenden Spalten xy entfernt werden.

Vorteilhafterweise können die Messwertmatrizen aus mindestens einem Vektor mit komplexen Zahlen gebildet werden (dies stellt eine 1 x h oder h x 1 (mit h mindestens gleich 2) Messwertmatrix dar), insbesondere aus mindestens zwei Vektoren, insbesondere durch Bilden einer Matrix (dies stellt eine g x h (mit g und h jeweils mindestens gleich 2) Messwertmatrix dar), wobei die Matrix insbesondere durch Verwenden der Vektoren als Spalten oder Zeilen der Matrix gebildet wird, und/oder insbesondere durch Bilden einer Autokorrelationsmatrix, insbesondere einer Autokorrelationsmatrix einer Matrix, welche durch Verwenden der Vektoren als Spalten oder Zeilen gebildet wird. Insbesondere ist die Messwertmatrix eine g x h (mit g und h jeweils mindestens gleich 2) Messwertmatrix. Insbesondere können aber als Messzahlen auch nur die einer Auswahl von Antennenkombinationen verwendet und/oder in die Messwertmatrix aufgenommen werden.

Eine Messwertmatrix aus n Ausführungen der Schritte a bis d mit e ersten und/oder f zweiten Antennen weist also insbesondere n Zeilen und/oder insbesondere min (e,f) bis e x f Spalten, insbesondere e + f bis e x f Spalten, auf.

Das Verfahren beinhaltet auch das Ermitteln einer vermeintlichen Entfernung und/oder vermeintlichen relativen Geschwindigkeit zwischen erstem und zweitem Objekt aus der Messwertmatrix. Dabei ist die vermeintliche relative Geschwindigkeit eine Geschwindigkeit, mit der sich die Objekte aufeinander zu bewegen oder voneinander weg bewegen, also insbesondere eine eindimensionale relative Geschwindigkeit zwischen den Objekten.

Die Ermittlung einer vermeintlichen Entfernung und/oder vermeintlichen relativen Geschwindigkeit zwischen erstem und zweitem Objekt aus der Messwertmatrix erfolgt durch Vergleich der Messwertmatrix mit einer Menge und/oder Auswahl gespeicherter und/oder errechneter Referenzmesswertmatrizen. Die Referenzmesswertmatrizen betreffen dabei unterschiedliche Entfernungen und unterschiedliche relative Geschwindigkeiten, wobei jede Referenzmesswertmatrix einer Entfernung und einer relativen Geschwindigkeit zugeordnet ist.

Als die vermeintliche Entfernung wird die Entfernung angenommen, die der gespeicherten und/oder errechneten Referenzmesswertmatrix zugeordnet ist, die am besten zu der Messwertmatrix passt, den geringsten Abstand zu ihr aufweist und/oder dieser am ähnlichsten ist. Alternativ oder zusätzlich kann als die vermeintliche relative Geschwindigkeit die Geschwindigkeit angenommen werden, die der gespeicherten und/oder errechneten Referenzmesswertmatrix zugeordnet ist, die am besten zu der Messwertmatrix passt, den geringsten Abstand zu ihr aufweist und/oder dieser am ähnlichsten ist.

Dabei kann mit mehrstufigen Vergleichen gearbeitet werden, in denen, insbesondere iterativ, die Menge und/oder Auswahl der Referenzmesswertmatrizen, mit denen die Messwertmatrix verglichen wird, verändert wird, insbesondere um die Genauigkeit iterativ zu steigern. Dabei wird insbesondere zunächst mit einer ersten, insbesondere kleinen, Auswahl von Referenzmesswertmatrizen betreffend einen ersten Entfernungsbereich gearbeitet, und die Auswahl solange gegen weitere, insbesondere kleine, Auswahlen von Referenzmesswertmatrizen betreffend jeweils Entfernungsbereiche, betreffend jeweils größere Entfernungen als die vorherige Auswahl, bis eine vorbestimmte Ähnlichkeit von mindestens einer Referenzmesswertmatrize der zuletzt verwendeten Auswahl zur Messwertmatrix überschritten und/oder eine vorbestimmte Entfernung zur Messwertmatrix von mindestens einer Referenzmesswertmatrize der zuletzt verwendeten Auswahl unterschritten wird und/oder die größte Ähnlichkeit einer Referenzmesswertmatrix der Auswahl zur Messwertmatrix verglichen mit der größten Ähnlichkeit einer Referenzmesswertmatrix der vorherigen Auswahl zur Messwertmatrix abfällt oder die geringste Entfernung einer Referenzmesswertmatrix der Auswahl zur Messwertmatrix verglichen mit der geringste Entfernung einer Referenzmesswertmatrix der vorherigen Auswahl zur Messwertmatrix ansteigt.

Insbesondere wird nachfolgend mit einer Auswahl von Referenzmesswertmatrizen gearbeitet und die Messwertmatrix mit diesen verglichen, die Entfernungen und/oder relative Geschwindigkeiten betreffen, die eine maximale vorbestimmte Abweichung von der relativen Geschwindigkeit und/oder Entfernung des zu der zur Messwertmatrix ähnlichsten, geringst entferntesten und/oder best passendsten Referenzmesswertmatrix der letzten und/oder vorletzten Auswahlen aufweisen. Hier kann wiederum iterativ mit weiteren Auswahlen gearbeitet werden, die jeweils eine kleinere vorbestimmte maximale Abweichung in Bezug auf relative Geschwindigkeit und/oder Entfernung zur in der vorausgehenden Auswahl zur Messwertmatrix ähnlichsten, best passendsten und/oder zur Messwertmatrix geringst entferntesten Referenzmesswertmatrix aufweisen.

Eine kleine Auswahl enthält insbesondere maximal 20% der verfügbaren gespeicherten und/oder errechneten Referenzmesswertmatrizen und/oder maximal 400, insbesondere maximal 100, Referenzmesswertmatrizen und/oder mindestens 10 Referenzmesswertmatrizen.

Als Maß für die Ähnlichkeit und/oder geringste Entfernung wird insbesondere eine Metrik eingesetzt, insbesondere nach einer Projektion, insbesondere der Messwertmatrizen und/oder ihrer Eigenvektoren und/oder derer ihrer Autokorrelationsmatrix oder einer Auswahl der Eigenvektoren oder Linearkombination daraus in den durch die Menge und/oder Auswahl und/oder aktuell verwendete Auswahl von Referenzmesswertmatrizen aufgespannten Raum oder umgekehrt. Die Auswahl erfolgt insbesondere anhand der Eigenwerte, unter Auslassen der Eigenwerte zu kleineren Eigenwerten als denjenigen, die nicht ausgelassen werden.

Als Metrik werden insbesondere solche verwendet, die die nachfolgenden Anforderungen erfüllen, auch Abstandsmetrik genannt:

Der Abstand zweier nicht identischer Objekte x und y darf nicht kleiner als Null sein. Zwei völlig ähnliche und/oder identische Objekte haben den Abstand Null. Der Abstand zwischen Objekt x und Objekt y ist derselbe wie zwischen Objekt y und Objekt x. Wenn man auf dem Weg von Objekt x zu Objekt z einen "Umweg" über Objekt y nimmt, kann der Weg nicht kürzer sein als bei einem direkten Weg von Objekt x zum Objekt z. Als Objekte werden dabei Messwertmatrizen und/oder Referenzmesswertmatrizen betrachtet.

Insbesondere handelt es sich um eine Euklidsche Entfernungs- und/oder Ähnlichkeitsmetrik. Insbesondere möglich ist eine Manhatten Entfernungs- und/oder Ähnlichkeitsmetrik, eine L-Norm und/oder Minkoswki Entfernungs- und/oder Ähnlichkeitsmetrik.

Insbesondere wird die Entfernung und/oder Ähnlichkeit bestimmt durch die Suche nach der Referenzmesswertmatrix, die den geringsten Abstand von einer Hyperebene oder einem Unterraum, insbesondere mit geringerer Dimension als die einer Hyperebene, im durch die Menge und/oder Auswahl von Referenzmesswertmatrizen und/oder gerade verwendeten Auswahl und/oder den Spaltenvektoren der Referenzmesswertmatrizen und/oder der gerade verwendeten Auswahl aufgespannten Referenzraum von der in den Raum projizierten Messwertmatrix oder ihrer Eigenvektoren, der ihre Autokorrelationsmatrix und/oder einer Linearkombination der Eigenvektoren aufweist, insbesondere durch eine Abstandsmetrik und/oder oben genannte Metrik bestimmt. Insbesondere ist der Unterraum der Raum oder die Hyperebene aufgespannt durch die in den Referenzraum projizierten Spaltenvektoren der Messwertmatrix, insbesondere in Form einer Autokorrelationsmatrix, ihren Eigenvektoren oder einer Auswahl ihrer Eigenvektoren, wobei die Auswahl der Eigenvektoren insbesondere dadurch gegeben ist, das die z Eigenvektoren mit den größten Eigenwerten verwendet werden, wobei z insbesondere kleiner gleich dem Rang der Messwertmatrix x 0,75 und/oder kleiner 10 und/oder kleiner 6 und/oder kleiner gleich der Anzahl der zur Bildung der Messwertmatrix verwendeten Antennenkombinationen ist.

Die Referenzmesswertmatrizen stellen insbesondere Matrizen, insbesondere Autokorrelationsmatrizen dar. Insbesondere gleichen die Referenzmesswertmatrizen jeweils der bei der der jeweiligen Referenzmesswertmatrix zugeordneten Geschwindigkeit und/oder Entfernungen zwischen den zwei Objekten bei der Durchführung eines erfindungsgemäßen, insbesondere des gleichen, Verfahrens, insbesondere in ungestörter Single-Path-Anordnung und/oder insbesondere mit den ersten Frequenzen und den zweiten Frequenzen und/oder insbesondere mit der selben Auswahl von Antennenkombinationen, bis zur Bestimmung der Messwertmatrix mit den zwei Objekten zu erwartenden und/oder gemessenen und/oder erstellten Messwertmatrix. Die Referenzmesswertmatrizen weisen jeweils insbesondere dieselbe oder eine größere Dimension auf, wie die Messwertmatrixinsbesondere vor der Reduzierung derer Dimension oder Rang insbesondere weisen sie komplexe Zahlen, insbesondere komplexe Messzahlen auf. Die Referenzmesswertmatrizen sind insbesondere so gewählt und/oder gebildet, dass jede Referenzmesswertmatrix zu einem Messwertmatrix identisch ist, die sich, insbesondere in ungestörter Single-Path-Anordnung, bei der Durchführung eines erfindungsgemäßen, insbesondere des gleichen, Verfahrens bis zur Erstellung der Messwertmatrix ergibt und/oder zu erwarten ist, bei Durchführung mit der der Referenzmesswertmatrix jeweils zugeordneten Entfernung und Geschwindigkeit zwischen den Objekten, insbesondere mit den ersten Frequenzen und den zweiten Frequenzen, die der Referenzmesswertmatrix zugeordnet sind und/oder insbesondere mit derselben Auswahl von Antennenkombinationen, die der Referenzmesswertmatrix zugeordnet ist. Unter einer ungestörten Single-Path-Anordnung ist insbesondere die Anordnung der zwei Objekte in einem leeren Raum zu verstehen, der insbesondere unendlich groß ist und/oder dessen Ränder nicht oder nur weniger als 10% der Strahlung reflektieren und/oder der in jeder Richtung mindestens zehnmal, insbesondere mindestens 100mal, so groß ist wie der Abstand zwischen den zwei Objekten.

Die Referenzmesswertmatrizen können beispielsweise durch Erzeugung von Messwertmatrizen bei bekannten Entfernungen und Geschwindigkeiten zwischen den zwei Objekten erfasst werden, insbesondere in idealer ungestörter Anordnung, insbesondere in einer ungestörten Single-Path-Umgebung. Bevorzugt werden sie aber, insbesondere um Messungenauigkeiten und Umwelteinflüsse auszuschließen, berechnet, insbesondere für eine ungestörten Single-Path-Umgebung, also für den Fall der Anordnung der zwei Objekte in einem freien Raum ohne Hindernisse und/oder bei gradliniger Ausbreitung der Signale vom Sender zum Empfänger und/oder zwischen erstem und zweitem Objekt, insbesondere für mindestens eine Menge und/oder Auswahl von Entfernungs- und Geschwindigkeitskombinationen, insbesondere mindestens 20, insbesondere mindestens 100, Entfernungs- und Geschwindigkeitskombinationen, insbesondere mit mindestens mindestens 10, insbesondere mindestens 500, unterschiedlichen Entfernungen und/oder Geschwindigkeiten.

Die Referenzmesswertmatrizen werden insbesondere durch Berechnung von komplexen Referenzmesszahlen und Anordnen von komplexen Referenzmesszahlen in je einer Matrix pro Referenzmesswertmatrix erfasst, wobei diese Matrix oder deren Autokorrelationsmatrix als eine Referenzmesswertmatrix verwendet wird. Insbesondere werden auf dieses Weise die Referenzmesswertmatrizen gewonnen. Dabei werden die komplexen Referenzmesszahlen insbesondere jeweils berechnet durch Berechnung der Ausbreitung, insbesondere der Phasenverschiebung und/oder Amplitude, eines ersten Signals von einer der ersten Antennen des ersten Objekts, insbesondere mit einer ersten Frequenz und/oder ersten Referenzfrequenz, zu einer der zweiten Antennen des zweiten Objekts und eines zweiten Signals von der zweiten Antenne des zweiten Objekts zu der ersten Antenne des ersten Objekts, insbesondere mit einer zweiten Frequenz und/oder zweiten Referenzfrequenz. Insbesondere wird pro Referenzmesswertobjekt pro Ausführung der Schritte a bis d und/oder pro Abfolge von erstem und zweitem Signal und/oder Frequenz und pro verwendeter, benötigter und/oder ausgewählter Antennenkombination eine komplexe Referenzmesszahl berechnet. Insbesondere wird für jeweils eine Entfernungs- und Geschwindigkeitskombination zwischen den Objekten und pro Ausführung der Schritte a bis d und/oder pro Abfolge von erstem und zweitem Signal und pro verwendeter, benötigter oder ausgewählter Antennenkombination eine komplexe Referenzmesszahl berechnet. Insbesondere werden die Berechnungen so durchgeführt, dass Zwischenergebnisse für eine Mehrzahl von Berechnungen von Referenzmesszahlen (wieder) verwendet werden können.

Die komplexen Referenzmesszahlen einer Referenzmesswertmatrix entsprechen insbesondere den komplexen Messzahlen der Messwertmatrix, die sich, insbesondere in ungestörter Single-Path-Anordnung, bei der Durchführung eines erfindungsgemäßen, insbesondere des gleichen, Verfahrens bis zur Erstellung der Messwertmatrix ergibt und/oder zu erwarten ist, insbesondere ohne Reduzierung der Dimension, bei Durchführung mit der der Referenzmesswertmatrix jeweils zugeordneten Entfernung und Geschwindigkeit zwischen den Objekten, insbesondere mit den ersten Frequenzen und den zweiten Frequenzen, die der Referenzmesswertmatrix zugeordnet sind und/oder insbesondere mit derselben Auswahl von Antennenkombinationen, die der Referenzmesswertmatrix zugeordnet ist.

Insbesondere sind die Referenzmesswertmatrizen jeweils einer Abfolge und/oder Menge unterschiedlicher erster Referenzfrequenzen und/oder einer Abfolge und/oder Menge unterschiedlicher zweiter Referenzfrequenzen und/oder einer Abfolge und/oder Menge unterschiedlicher erster und/oder und zweiter Signale zugeordnet. Insbesondere sind die Referenzmesswertmatrizen jeweils einer Abfolge und/oder Menge von Antennenkombinationen zugeordnet. Die Referenzmesswertmatrizen sind insbesondere so gebildet, dass sie mit Messwertmatrizen identisch sind, die sich bei der Durchführung des Verfahrens mit der Abfolge und/oder Menge unterschiedlicher erster Referenzfrequenzen als unterschiedliche erste Frequenzen und/oder mit der Abfolge und/oder Menge unterschiedlicher zweiter Referenzfrequenzen als unterschiedliche zweite Frequenzen und/oder mit der Abfolge und/oder Menge an Antennenkombinationen als Auswahl an Antennenkombinationen und/oder erste und/oder zweite Antennen ergibt und/oder zu erwarten sind, insbesondere in einer ungestörten Single-Path-Umgebung.

Insbesondere werden die Referenzmesswertmatrizen, insbesondere während der vielfachen Ausführungen der Schritte a bis d des Verfahrens, für die verwendeten und/oder ausgewählten Antennenkombinationen und/oder die ersten und zweiten Signale und/oder die ersten und zweiten Frequenzen für eine Auswahl von Entfernungen und/oder Geschwindigkeiten berechnet.

Mit besonderem Vorteil werden die erste und zweite Frequenz einer Ausführung der Schritte a bis d möglichst identisch gewählt, insbesondere mit einer Differenz von weniger als 20kHz, insbesondere weniger als 200Hz, und/oder weniger als 1 Promille der Frequenz des ersten und/oder zweiten Signals, insbesondere weniger als 0,1 Promille der Frequenz des ersten und/oder zweiten Signals. Dies kann beispielsweise durch vorherigen Austausch von elektromagnetischen Wellen zwischen dem ersten und zweitem Objekt erfolgen, mittels der die lokalen Oszillatoren auf identische und/oder möglichst ähnliche Frequenzen gestimmt werden insbesondere mit einer Differenz von weniger als 20kHz, insbesondere weniger als 200Hz, und/oder weniger als 1 Promille der Frequenz des ersten und/oder zweiten Signals. In einer solchen Ausgestaltung mit Frequenzdifferenzen von weniger als 20kHz, insbesondere weniger als 200Hz, und/oder weniger als 1 Promille der Frequenz des ersten und/oder zweiten Signals kann auch auf die Frequenzdifferenzmessung verzichtet werden und angenommen werden, dass die Frequenzen gleich sind. Dann sind insbesondere die Referenzmesswertmatrizen insbesondere einer Abfolge und/oder Menge von Referenzfrequenzen zugeordnet anstelle einer Abfolge und/oder Menge von ersten Referenzfrequenzen und einer Abfolge und/oder Menge von zweiten Referenzfrequenzen. Die Referenzmesswertmatrizen sind dann insbesondere so gebildet, dass sie mit Messwertmatrizen identisch sind, die sich bei der Durchführung des Verfahrens mit der Abfolge und/oder Menge unterschiedlicher Referenzfrequenzen als unterschiedliche erste Frequenzen und als unterschiedliche zweite Frequenzen und/oder mit der Abfolge und/oder Menge an Antennenkombinationen als Auswahl an Antennenkombinationen und/oder erste und/oder zweite Antennen ergibt und/oder zu erwarten sind, insbesondere in einer ungestörten Single-Path-Umgebung.

Es ist aber auch möglich, stärker unterschiedliche Frequenzen zu verwenden.

Da der erste fiktive Zeitpunkt und der zweite fiktive Zeitpunkt in der Praxis meist zumindest geringfügig voneinander abweichen, entsteht bei Frequenzunterschieden in der Regel bei Berechnung der theoretischen Phasenlage(n) zu dem/den fiktiven Zeitpunkt(en) ein Phasenfehler, insbesondere in der Größe der Zeitabweichung zwischen erstem fiktiven Zeitpunkt und zweitem fiktiven Zeitpunkt multipliziert mit dem Frequenzunterschied. Da in der Regel aber auch durch andere Einflüsse, wie Jitter und Rauschen, mit Phasenfehlern gerechnet werden muss, ist es in der Regel ausreichend, die Frequenzen soweit einander anzunähern oder angenähert zu wählen, dass sich dadurch kein größerer Fehler ergibt, als durch andere Einflüsse ohnehin gegeben ist. Ein Phasenfehler durch die Zeitungenauigkeit und die Frequenzdifferenz von kleiner oder gleich 10°, insbesondere kleiner gleich 3°, ist also häufig ausreichend. Es wir daher bevorzugt das Verfahren so auszugestalten, dass die Differenz zwischen erstem fiktiven Zeitpunkt und zweitem fiktiven Zeitpunkt multipliziert mit der Differenz der Frequenz des ersten und der Frequenz des zweiten Signals bei einer Ausführung der Schritte a bis d, insbesondere allen Ausführungen der Schritte a bis d, kleiner ist als 10°, insbesondere kleiner oder gleich 3° ist und/oder kleiner gleich dem durch Rauschen und Jitter bedingten Phasenfehler bei der Messung der Phasenlage am ersten und/oder zweiten Objekt und/oder kleiner gleich dem Fehler bei der Erfassung der ersten und/oder zweiten Phaseninformation.

Mit besonderem Vorteil beinhalten die Messwertmatrizen die Phaseninformationen der empfangenen ersten und/oder zweiten Signale und die Amplitude der empfangenen ersten und/oder zweiten Signale.

Die ersten Signale je unterschiedlicher Ausführung der Schritte a bis d können gleich oder unterschiedlich und/oder die zweiten Signale je unterschiedlicher Ausführung der Schritte a bis d können gleich oder ungleich und/oder das erste Signal je einer Ausführung der Schritte a bis d kann zum zweiten Signal je Ausführung gleich oder verschieden sein, insbesondere in Bezug auf den Signalverlauf, die Amplitude, Polarisation und/oder die im Signal aufmodulierte Information, insbesondere in Amplitude und/oder Polarisation. Dies gilt auch für die Frequenz, wobei es insbesondere

7

EP 3 564 707 B1

bevorzugt wird, wenn das erste Signal und das zweite Signal innerhalb einer jeden Ausführung der Schritte a bis d bezüglich der Frequenz identisch sind oder zumindest eine gemeinsame erste und zweite Frequenz beinhalten, wobei die ersten und zweiten Signale und/oder ersten und zweiten Frequenzen unterschiedlicher Ausführungen der Schritte a bis d sich unterscheiden und sich insbesondere zumindest teilweise unterscheiden.

Mit besonderem Vorteil beinhaltet das Verfahren das Übermitteln und/oder die Nutzung der Frequenzdifferenzen jeweils zwischen der ersten und der zweiten Frequenz am ersten und/oder am zweiten Objekt und/oder der ersten und/oder zweiten Frequenzen am ersten und/oder zweiten Objekt zur Bearbeitung der Messwertmatrix und/oder zur Ermittlung der ersten und/oder zweiten theoretischen Phasenlage und/oder zur Ermittlung der vermeintlichen Entfernung und/oder vermeintlichen relativen Geschwindigkeit.

Insbesondere wird die Messwertmatrix vor dem Vergleich mit den Referenzmesswertmatrizen zur Entfernung und/oder Verringerung der Auswirkungen von Phasensprüngen und/oder Multipathumgebungen und/oder Umwelteinflüssen und/oder Messfehlern und/oder Verringerung der Auswirkungen von Rauschen, Phasenjitter und/oder Messfehlern und/oder zur Reduzierung der Dimension ders Messwertmatrix bearbeitet.

Mit besonderem Vorteil beinhaltet das Verfahren die Bearbeitung der Messwertmatrix durch Reduzieren der Dimension, insbesondere auf Basis der Eigenwerte, dadurch dass nur die Eigenvektoren der z größten Eigenwerte der Messwertmatrix oder Linearkombinationen daraus als Messwertmatrix verwendet werden, wobei die Auswahl der Eigenvektoren insbesondere dadurch gegeben ist, das die z Eigenvektoren mit den größten Eigenwerten verwendet werden, wobei z insbesondere kleiner gleich dem Rang der Messwertmatrix x 0,75 und/oder keiner 10 und/oder kleiner 6 und/oder kleiner gleich der Anzahl der zur Bildung der Messwertmatrix verwendeten Antennenkombinationen ist.

Mit besonderem Vorteil beinhaltet die Bearbeitung der Messwertmatrix, insbesondere in einem ersten Schritt, das Bearbeiten der beinhalteten Phaseninformation oder beinhalteten Phasenlagen, ersten und/oder zweiten theoretischen Phasenlagen und/oder der komplexen Messzahlen, insbesondere durch Halbierung zumindest einiger, insbesondere aller, der Phaseninformation oder Phasenlagen, insbesondere zumindest einiger der imaginären Anteile oder Phasenanteile der komplexen Messzahlen, insbesondere abhängig von der in der Messwertmatrix beinhalteten Werte betreffend benachbarte erste und/oder zweite Frequenzen.

Insbesondere wird, insbesondere anschließend, eine Bearbeitung, insbesondere Veränderung und/oder Umkehrung der Phasenlage und/oder Phaseninformation um 180°, insbesondere der Phasenlage einer komplexen Messzahl, vorgenommen, insbesondere dann, wenn sich durch die Veränderung der Phaseninformationen und/oder Phasenlage der komplexen Messzahl die Differenz zur Phaseninformation und/oder Phasenlage der komplexen Messzahl der vorherigen und/oder nachfolgenden Ausführung der Schritte a bis d und/oder Ausführung der Schritte a bis d mit der nächsthöheren ersten und/oder zweiten und/oder Summe aus erster und zweiter Frequenz und/oder nächst niedrigen ersten und/oder zweiten und/oder Summe aus erster und zweiter Frequenz der Ausführungen, und/oder die Differenz zu der Phaseninformationen und/oder Phasenlage der komplexen Messzahl der in der selben Spalte aber eine Zeile ober und/oder unterhalb angeordneten komplexen Messzahl verringert, insbesondere unter Betrachtung der Phaseninformationen und/oder Phasenlagen der komplexen Messzahlen unter Multiplikation jeder Phaseninformation mit der Amplitude der komplexen Messzahl, insbesondere betrachtet modulo 2 Pi.

Mit besonderem Vorteil beinhaltet die Bearbeitung der Messwertmatrix das Bearbeiten der beinhalten Phaseninformation oder beinhalteten Phasenlagen, ersten und/oder zweiten theoretischen Phasenlagen und/oder der komplexen Messzahlen, insbesondere durch Addieren oder Subtrahieren von 180° zumindest zu oder von einigen der Phaseninformation oder Phasenlagen, insbesondere zumindest zu oder von einigen der komplexen Messzahlen, insbesondere abhängig von der der in der Messwertmatrix beinhalteten Werte betreffend benachbarte erste und/oder zweite Frequenzen.

Insbesondere werden alle Phaseninformationen und/oder komplexen Messzahlen einer Zeile einer Messwertmatrix, insbesondere aller Zeilen einer Messwertmatrix jeweils, identisch, beispielsweise durch jeweiliges addieren von 180° zu der Phaseninformation oder Phasenlage, insbesondere zu der Phasenlage der komplexen Messzahl, bearbeitet.

Dadurch kann die Phasenverschiebung zwischen den Ausführungen der Schritte a bis d für alle Antennenkombinationen gleichzeitig betrachtet und/oder korrigiert werden.

Insbesondere wird danach entschieden, ob die Phasenlage um 180° geändert werden soll, ob dadurch die Summe über

eine Zeile, alle Antennenkombinationen einer Zeile oder einer Ausführung der Schritte a bis d und/oder alle Spalten und/oder eine Ausführung der Schritte a bis d

der Differenzen der Phasen zu den Phasen mindestens einer, insbesondere zwei, anderen Ausführungen der Schritte a bis d und/oder der Summe der absoluten Werte der Phasen über eine Zeile, alle Antennenkombinationen und/oder über alle Spalten und/oder einer Ausführung der Schritte a bis d, insbesondere einer Messwertmatrix und/oder Summe der, insbesondere mit der jeweiligen Amplitude der Messzahl gewichteten Phasen,, verringert wird. Insbesondere wird bei einer Verringerung durch eine solche Veränderung der Phasenlage um 180° eine Veränderung der Phasenlage um 180° durchgeführt, sonst nicht.

Insbesondere wird jeweils für ein j die Summe Phase($M_{j,xy}$) und/oder Amplitude($M_{j,xy}$) x Phase($M_{j,xy}$) über alle xy gebildet und geprüft, ob sie sich durch Änderung aller Phasenlagen um 180° in $M_{j,xy}$ für dieses j verringert und bei einer Verringerung eine Veränderung der Phasenlage um 180° durchgeführt.

Insbesondere alternativ und/oder zusätzlich wird jeweils für ein j = j1 die Summe über alle xy der Zahlen $M_{ji,xy}$ - $M_{j2,xy}$ und/oder Zahlen $M_{j1,xy}$ - $M_{j2,xy}$ - $M_{j3,xy}$ mit j1 < > j2< >j3 und j1 <>j3, insbesondere j2 + 1 = j1 und j1 + 1 = j3 gebildet und geprüft, ob sie sich durch Änderung aller Phasenlagen um 180° in $M_{j1,xy}$ verringert und bei Verringerung alle Phasenlagen der $M_{j1,xy}$ um 180° geändert.

Alternativ und/oder zusätzlich wird, insbesondere in einem weiteren Schritt, eine Bearbeitung, insbesondere Veränderung und/oder Umkehrung der Phasenlage und/oder Phaseninformation um 180°, insbesondere dann vorgenommen, wenn dadurch die Phasenlage und/oder Phaseninformation der bei einer erwarteten Entfernung und/oder Geschwindigkeit zwischen erstem und zweitem Objekt erwarteten Phasenlage und/oder Phaseninformation näher kommt. Dabei wird die erwartete Entfernung und/oder Geschwindigkeit zwischen erstem und zweitem Objekt aus einer anderen, also beispielsweise einer früheren Messung oder einer Messung mittels eines anderen Verfahrens, insbesondere anhand der erfindungsgemäßen Signale, gewonnen. Die erwartete Entfernung und/oder Geschwindigkeit zwischen erstem und zweitem Objekt wird insbesondere mittels mindestens einer Fouriertransformation der Messwerte des/der ersten und/oder zweiten Signale/s mindestens einer der Ausführungen der Schritte a bis d und/oder mittels des und/oder der dominanten, stärksten und/oder größten Anteile/s und/oder Summanden und/oder Spektralanteil mindestens einer Fouriertransformation der Messwerte des/der ersten und/oder zweiten Signale/s und/oder mittels des und/oder der Anteile/s mit der größten Amplitude einer Fouriertransformation der Messwerte mindestens einer der Ausführungen der Schritte a bis d der Messwerte des/der ersten und/oder zweiten Signale/s mindestens einer der Ausführungen der Schritte a bis d bestimmt.

Mit Vorteil werden mindestens zwei erste und/oder mindestens zwei zweite Antennen zum Empfang und/oder zum Senden verwendet.

Mit Vorteil wird die erste Phaseninformation je erstem Signal und/oder je Ausführung der Schritte a bis d aus und/oder mittels mindestens zwei ermittelten Phasenlagen ermittelt und/oder wird die zweite Phaseninformation je zweitem Signal und/oder je Ausführung der Schritte a bis d aus und/oder mittels mindestens zwei ermittelten Phasenlagen ermittelt. Insbesondere ist die erste Phaseninformation eine relative Phasenlage des ersten Signals zu einem zweiten Oszillator am zweiten Objekt und/oder zum zweiten Signal am zweiten Objekt und ist die zweite Phaseninformation eine relative Phasenlage des zweiten Signals zu einem ersten Oszillator am ersten Objekt und/oder zum ersten Signal am ersten Objekt. Insbesondere wird die erste Phaseninformation aus einer relativen Phasenlage des ersten Signals zu einem zweiten Oszillator am zweiten Objekt und/oder zum zweiten Signal am zweiten Objekt und wird die zweite Phaseninformation aus einer relativen Phasenlage des zweiten Signals zu einem ersten Oszillator am ersten Objekt und/oder zum ersten Signal am ersten Objekt, gewonnen. Mit besonderem Vorteil wird die erste Phaseninformation aus einer relativen Phasenlage des ersten Signals zu einem ersten Oszillator am ersten Objekt und aus einer relativen Phasenlage des ersten Signals zu einem zweiten Oszillator am zweiten Objekt, insbesondere durch deren Addition, und/oder wird die zweite Phaseninformation aus einer relativen Phasenlage des zweiten Signals zu dem zweiten Oszillator am zweiten Objekt und aus einer relativen Phasenlage des zweiten Signals zu dem ersten Oszillator am ersten Objekt, insbesondere durch deren Addition, gewonnen. Mit besonderem Vorteil ist die erste Phaseninformation durch eine relative Phasenlage des ersten Signals zu einem ersten Oszillator am ersten Objekt und eine relative Phasenlage des ersten Signals zu einem zweiten Oszillator am zweiten Objekt, insbesondere durch deren Addition, gegeben und/oder ist die zweite Phaseninformationen durch eine relative Phasenlage des zweiten Signals zu dem zweiten Oszillator am zweiten Objekt und eine relative Phasenlage des zweiten Signals zu dem ersten Oszillator am ersten Objekt, insbesondere durch deren Addition, gegeben.

Mit Vorteil wird ein Testobjekt, das das erste oder zweite Objekt ist und dass insbesondere eines ist, das nur eine erste oder zweite Antenne aufweist, gedreht und/oder geschwenkt, während die Schritte a bis d vielfach durchgeführt werden, und wird dabei vielfach die relative vermeintliche Geschwindigkeit zwischen dem ersten und zweiten Objekt bestimmt, wobei insbesondere die relative und/oder absolute Lage und/oder Orientierung des Testobjekts beim Senden und/oder Empfangen des ersten und/oder zweiten Signals am Testobjekt erfasst wird und/oder in Korrelation zu der Zeit der vielfachen Durchführung der Schritte a bis d. Eine solche Erfassung in Korrelation kann beispielsweise dadurch erfolgen, dass die Orientierung und/oder Lage in Abhängigkeit der Zeit erfasst wird und erfasst wird, zu welchen Zeitpunkten das Senden und/Empfangen der vielfachen Ausführungen der Schritte a bis d erfolgt. Das Objekt, auch Referenzobjekt, aus dem ersten und zweiten Objekt, das nicht das Testobjekt darstellt, ruht dabei zumindest in Bezug auf seine Orientierung im Raum und/oder abgesehen von maximal translativen Bewegungen. Das Referenzobjekt weist dabei insbesondere mehr als eine erste oder zweite Antenne auf. Insbesondere wird dabei ermittelt, bei welcher und/oder welchen Lage(n) und/oder Orientierung(en) die vermeintliche Geschwindigkeit und/oder ihr Betrag minimal und/oder maximal ist. Daraus und/oder durch eine Regression oder Regressionsanalyse über die vermeintlichen Geschwindigkeiten lässt sich die Orientierung des Testobjektes relativ zum Referenzobjekt direkt ableiten. Dazu, insbesondere zur Erfassung der Orientierung des Testobjekts, wird insbesondere mindestens ein Inertialsensor und/oder Rotationssensor und/oder Beschleunigungssensor und/oder Kompass im und/oder am Testobjekt verwendet, um die Orientierung des Testobjekts im Raum kontinuierlich zu ermitteln und zu erfassen, bei welcher Orientierung die ersten und/oder zweiten Signale am Testobjekt empfangen und/oder gesendet werden. Durch Ermitteln der Minima der vermeintlichen Geschwindigkeit und/oder Maxima der vermeintlichen Geschwindigkeit und/oder durch einen Fit und/oder eine Regression über die vermeintlichen Geschwindigkeiten und/oder ihren Betrag kann die Orientierung des Testobjekts relativ zum Referenzobjekt, insbesondere zu den Zeitpunkten des Sendens und/oder Empfangens der ersten und/oder zweiten Signale am Testobjekt ermittelt werden. Insbesondere werden beim Drehen und/oder Schwenken und/oder pro Umdrehung des Testobjekts mindestens zehn Ausführungen der Schritte a bis d durchgeführt. Mit besonderem Vorteil wird die Orientierung des Testobjekts durch das Drehen und/oder Schwenken um mindestens 60°, insbesondere um mindestens 120° um mindestens einen Raumwinkel gedreht.

Mit Vorteil ist die vermeintliche Geschwindigkeit und/oder die Geschwindigkeit der Bewegung des ersten und zweiten Objekts aufeinander zu oder voneinander weg kleiner oder gleich einem Viertel der größten Wellenlänge der ersten und zweiten Signale zweier aufeinander folgenden Ausführungen der Schritte a bis d dividiert durch die Zeit zwischen den Enden der zwei aufeinander folgenden Ausführungen der Schritte a bis d oder den Anfängen der zwei aufeinander folgenden Ausführungen der Schritte a bis d, insbesondere kleiner oder gleich dem Werte, den man erhält, wenn man das Ergebnis noch einmal dividiert durch zwei.

Mit Vorteil wird die Entfernung zwischen den Objekten und/oder werden die Frequenzen und/oder Wellenlängen der ersten und zweiten Signale zweier aufeinander folgenden Ausführungen und/oder die Zeit zwischen den Enden zweier aufeinander folgenden Ausführungen der Schritte a bis d und/oder zwischen den Enden der zwei aufeinanderfolgenden Ausführungen oder zwischen den Anfängen zweier aufeinander folgenden Ausführungen der Schritte a bis d und/oder zwischen den Anfängen der zwei aufeinander folgenden Ausführungen der Schritte a bis d so gewählt, dass die vermeintliche Geschwindigkeit und/oder die Geschwindigkeit der Bewegung des ersten und zweiten Objekts aufeinander zu oder voneinander weg kleiner oder gleich einem Viertel der größten Wellenlängen der ersten und zweiten Signale der zwei aufeinander folgenden Ausführungen der Schritte a bis d dividiert durch die Zeit zwischen den Enden der zwei aufeinander folgenden Ausführungen der Schritte a bis d und/oder zwischen den Anfängen der zwei aufeinander folgenden Ausführungen der Schritte a bis d ist, insbesondere dividiert durch das Doppelte der Zeit.

Bei einer solchen Ausgestaltung lässt sich eine besonders robuste, fehlerunanfällige und genaue Ausgestaltung erreichen.

Vorteilhafterweise werden die Frequenzen der ersten Signale und der zweiten Signale einander angeglichen, insbesondere durch Austausch elektromagnetischer Signale zwischen dem ersten und/oder zweiten Objekt, insbesondere unter Anpassen an die Frequenz der empfangenen elektromagnetischen Signale, insbesondere unter der Annahme, dass keine Dopplerverschiebung vorliegt und/oder unter Anpassen an die Frequenz der empfangenen elektromagnetischen Signale nach Korrektur der Frequenz um eine Dopplerverschiebung durch eine zuvor ermittelte vermeintliche Geschwindigkeit und/oder durch eine bekannte oder ermittelte Geschwindigkeit und/oder Mindestgeschwindigkeit.

Insbesondere handelt es sich bei dem ersten und/oder zweiten Signal um ein Bluetooth-, Wifi-, DECT-, Mobilfunk- (GSM-, UMTS-, LTE- und/oder 5G-) Signal.

Gelöst wird die Aufgabe auch durch ein System zur hochauflösenden Bestimmung einer Entfernung zwischen einem ersten Objekt und einem zweiten Objekt mittels zwischen dem ersten und dem zweiten Objekt übertragender elektromagnetischer Signale, umfassend das erste und das zweite Objekt, wobei das erste Objekt mindestens eine erste Antenne und/oder das zweite Objekt mindestens eine zweite Antenne aufweist und insbesondere umfassend jeweils mindestens eine Antenne, mindestens einen Oszillator, mindestens einen Analog-DigitalWandler, Mischer, Umschalter für die Umschaltung zwischen mehreren Antennen, eine CPU, einen Speicher, Auswerteeinheit, Eingangsverstärker, Ausgangsverstärker, Bandfilter, mindestens einen Timer und/oder eine Software, insbesondere in einem Speicher, wobei die Software im ersten Objekt und im zweiten Objekt insbesondere so ausgebildet sind, dass sie bei Ausführung durch jeweils eine CPU am ersten und am zweiten Objekt das erfindungsgemäße Verfahren durchführen. Das System stellt und/oder die Objekte stellen jeweils ein Hardware- und Softwaresystem dar. Insbesondere ist ein erstes der zwei Objekte tragbar und insbesondere ein Mobiltelefon und/oder ist das andere der zwei Objekte ein zumindest für den Zeitraum der Messung ortsfestes, insbesondere ortsfest.

Insbesondere handelt es sich bei dem System um ein Bluetooth-, Wifi-, DECT-, Mobilfunk(GSM, UMTS, LTE und/oder 5G)-System.

Gelöst wird die Aufgabe auch durch ein Verfahren zur Sicherung eines Zugangssystems aufweisend ein erstes Objekt, insbesondere ein Autorisierungsmittel, und ein zweiten Objekt, insbesondere ein Zugangskontrollmittel, wobei zwischen dem ersten Objekt, insbesondere eine erste Antenne aufweisend, und dem zweiten Objekt, insbesondere eine zweite Antenne aufweisend, erste Signale mit einer ersten Frequenz von einem ersten aus den zwei Objekten, insbesondere vom ersten oder zweiten Objekt, zu einem zweiten aus den zwei Objekten, insbesondere vom ersten oder zweiten Objekt, und zwischen dem zweiten Objekt und dem ersten Objekt zweite Signale mit einer zweiten Frequenz von dem zweiten aus den zwei Objekten, insbesondere vom ersten oder zweiten Objekt, zu dem ersten aus den zwei Objekten, insbesondere vom ersten oder zweiten Objekt, mittels eines Übertragungssystems, insbesondere aufweisend eine, insbesondere die, erste Antenne und/oder eine, insbesondere die, zweite Antenne, übertragen wird, wobei die Entfernung und/oder Geschwindigkeit zwischen ersten und zweiten Objekt mittels einem erfindungsgemäßen Verfahrens oder Systems bestimmt wird und bei Überschreiten einer vorbestimmten Entfernung und/oder Geschwindigkeit und/oder bei einer vorbestimmten Abweichung der mittels des erfindungsgemäßen Verfahrens oder Systems bestimmten Entfernung und/oder Geschwindigkeit von einer vorbestimmten oder mit anderen Methoden berechneten Entfernung und/oder Geschwindigkeit der Zugang, Zutritt, das Aktivieren, das Deaktivieren und/oder ein Öffnen durch das zweite Objekt, insbesondere Zugangskontrollmittel, verwehrt wird.

Gelöst wird die Aufgabe auch durch ein Zugangskontrollsystem aufweisend ein erstes Objekt, insbesondere ein Autorisierungsmittel, insbesondere eine erste Antenne aufweisend, und ein zweites Objekt, insbesondere ein Zugangskontrollmittel, insbesondere eine zweite Antenne aufweisend, wobei das Zugangskontrollsystem ein Übertragungssystem aufweisend eine, insbesondere die, erste und eine, insbesondere die, zweite Antenne aufweist, eingerichtet zwischen dem ersten Objekt, insbesondere Autorisierungsmittel, und dem zweiten Objekt, insbesondere Zugangskontrollmittel, erste Signale mit einer ersten Frequenz von der ersten Antenne zu der zweiten Antenne und zweite Signale mit einer zweiten Frequenz von der zweiten Antenne zu der ersten Antenne zu übertragen, wobei das Zugangskontrollsystem eingerichtet ist, eine Entfernung und/oder Geschwindigkeit zwischen dem ersten und zweiten Objekt mittels einem der vorstehenden Verfahren zu bestimmen und bei Überschreiten einer vorbestimmten Entfernung und/oder Geschwindigkeit und/oder bei einer vorbestimmten Abweichung der mittels des Verfahrens bestimmten Entfernung und/oder Geschwindigkeit von einer vorbestimmten oder mit anderen Methoden berechneten Entfernung und/oder Geschwindigkeit den Zugang, Zutritt, das Aktivieren, das Deaktivieren und/oder das Öffnen, insbesondere durch das zweite Objekt, insbesondere Zugangskontrollmittel, insbesondere zum zweiten und/oder ersten Objekt, zu verwehren.

Gelöst wird die Aufgabe auch durch die Verwendung einer vermeintlichen Entfernung und/oder Geschwindigkeit und/oder Entfernung und/oder Geschwindigkeit zur Zutrittskontrolle, Authentifizierung, Entfernungsmessung, Synchronisierung und/oder zur Erkennung und/oder zur Abwehr von Relayangriffen, wobei mittels eines Übertragungssystems, insbesondere aufweisend eine ersten und/oder zweite Antenne, erste Signale mit einer ersten Frequenz von einem ersten zu einem zweiten Objekt und zweite Signale mit einer zweiten Frequenz von dem zweiten zu dm ersten Objekt übertragen werden und eine auf Basis einer, insbesondere erfindungsgemäßen, Messwertmatrix ermittelten vermeintlichen Geschwindigkeit und/oder vermeintlichen Entfernung verwendet wird, um die Entfernung und/oder Geschwindigkeit gemäß eines erfindungsgemäßen Verfahrens und/oder Systems und/oder zu detektieren und/oder zu bestimmen,.

Die oben zum Verfahren zur Bestimmung der Entfernung und/oder Geschwindigkeit gemachten Ausführungen gelten für identische Begriffe ebenso für bezüglich des Verfahrens zur Sicherung eines Zugangssystems, der Verwendung und/oder des Systems.

Insbesondere wird bezüglich der Verfahren, der Verwendung und/oder Systems ein Zugang, ein Zutritt, ein Aktivieren, ein Deaktivieren und/oder ein Öffnen, insbesondere durch das Zugangskontrollmittel und/oder des Zugangskontrollmittels, gewährt, wenn keine Abweichung und/oder Überschreitung vorliegt. Insbesondere der Zugang, der Zutritt, das Aktivieren, Deaktivieren und/oder das Öffnen nur gewährt, wenn bei einer Vielzahl von Wiederholungen keine oder nur einer vorbestimmten Anzahl von Abweichung(en) und/oder Überschreitung(en) vorliegt/en oder wenn keine oder maximal eine vorbestimmte Anzahl von Abweichung(en) und/oder Überschreitung(en) vorliegt/en.

Insbesondere wird der Zugang, der Zutritt, das Aktivieren, Deaktivieren und/oder das Öffnen nur gewährt, wenn mindestens eine weitere Authentifizierungsanforderung erfüllt ist, beispielsweise ein korrektes Passwort eingegeben wird oder das Zertifikat gültig und/oder im Zugangssystem als zulässig gekennzeichnet ist. Mit besonderem Vorteil beinhaltet die mindestens eine Authentifizierungsanforderung eine Vielzahl von Authentifizierungsanforderung, die von dem Zeitpunkt des Empfangs abhängen, insbesondere nach dieser Anmeldung und/oder mindestens eine Authentifizierungsanforderung, die unabhängig von dem Empfangszeitpunkt ist. Unabhängig vom Empfangszeitpunkt ist auch die zeitliche Gültigkeit eines Zertifikates, die zwar von der Zeit abhängen mag, aber nicht unmittelbar von der Zeit des Empfangs selbst.

Als Zugang wird insbesondere nicht nur ein Zugang in einen Bereich, im Sinne der möglich Bewegung eines Gegenstandes und/oder einer Person in diesen Bereich, beispielsweise das innere eines Raumes oder eines Fahrzeuges, sondern insbesondere auch der Zugang zu einer Funktion, insbesondere auch im Sinne von Aktivierung einer Funktion, verstanden, so beispielsweise der Zugang zu der Funktion des Anlassens oder Startens einer Fahrzeuges oder der Zugang zu der Funktion "Kaffee ausgeben" einer Kaffeemaschine. Entsprechend sind Zugangskontrollsysteme insbesondere nicht nur solche, die nur einen Zugang in einen Bereich, im Sinne der möglich Bewegung eines Gegenstandes und/oder einer Person in diesen Bereich hinein, kontrollieren, beschränken und/oder schützen, sondern insbesondere auch solche, die den Zugang zu einer Funktion, insbesondere auch im Sinne von Aktivierung einer Funktion, kontrollieren, beschränken und/oder schützen.

Als Zugangskontrollsystem kommen insbesondere Autorisierungssystem, beispielsweise zur Anmeldung in einem Computersystem, beispielsweise mittels Passwort und/oder Zertifikat, oder auch klassische Zugangskontrollsysteme wie Schlösser, Schranken, Türen und/oder Schleusen und/oder Aktivierung von Funktionen, beispielsweise einer Servicestation, wie Kaffeeautomat, in Frage. Insbesondere kann es sich dabei um Türen und/oder Zündschlösser und/oder Anlasser eines Fahrzeuges (z.B. Kraftfahrzeug, Flugzeug, Schiff oder autonomes Taxi - sowie aller denkbaren weiteren) handeln. Ebenfalls kann es sich um einen Zugang zu einer und/oder Aktivierung einer beliebigen Servicestation (Geldautomat, Telefon, Kaffeeautomat - die Liste ist beliebig erweiterbar) handeln. Als Autorisierungsmittel kommen beispielsweise Mobiltelefon, Schlüssel, Zertifikate und/oder Eingabesysteme zur Eingabe von Passwörtern in Frage.

Insbesondere handelt es sich bei dem Übertragungssystem der Verfahren, der Verwendung und/oder des Systems um ein drahtloses, beispielsweise eines verwendet für die Kommunikation mit Funkschlüsseln oder Nahfeldschlüsseln, insbesondere für Kraftfahrzeuge, und zwischen Nahfeldschlüsseln und einem Kraftfahrzeug oder um zwei Bluetoothmodule.

Erfindungsgemäß umfasst das System mindestens eine Steuerungsvorrichtung am ersten Objekt und eine Steuerungsvorrichtung am zweiten Objekt und mindestens eine Auswerteeinheit, insbesondere am ersten Objekt und/oder Testobjekt, beinhaltend eine CPU und einen Speicher, insbesondere am ersten und/oder zweiten Objekt, wobei die erste Steuerungseinrichtung eingerichtet ist zum vielfachen Bewirkens des

> a. Sendens eines ersten Signals mit einer ersten Frequenz vom ersten Objekt aus mit der mindestens einen ersten Antenne
>
> und
>
> d. Empfangen eines zweiten Signals am ersten Objekt mit der mindestens einen ersten Antenne
> und wobei die zweite Steuerungseinrichtung eingerichtet ist zum vielfachen Bewirkens des
> c. Senden des zweiten Signals mit einer zweiten Frequenz vom zweiten Objekt aus mit der mindestens einen zweiten Antenne und
> b. Empfangen des ersten Signals am zweiten Objekt mit der mindestens einen zweiten Antenne.

Die Steuerungseinrichtungen können Teil der mindestens einen Auswerteeinheit sein, sich mit ihr, eine CPU und/oder einen Speicher teilen, oder gemeinsam mit ihr durch realisiert sein, beispielsweise in gemeinsamer Hardware implementiert sein.

Erfindungsgemäß ist die mindestens eine Auswerteeinheit eingerichtet zum Bereitstellen je erstem Signal und/oder je Ausführung der Schritte a bis d mindestens einer aus und/oder mittels mindestens einer ermittelten Phasenlage des empfangen ersten Signals ermittelten ersten Phaseninformation und zum Bereitstellen je zweitem Signal und/oder je Ausführung der Schritte a bis d mindestens einer aus und/oder mittels mindestens einer ermittelten Phasenlage des empfangen zweiten Signals ermittelten zweiten Phaseninformation und Erfindungsgemäß ist die mindestens eine Auswerteeinheit eingerichtet eineMesswertmatrix aus sowohl den ersten und zweiten Phaseninformationen als auch mindestens einer Amplitude je erster und/oder zweiter Phaseninformation oder je Ausführung der Schritte a bis d zu bilden. Erfindungsgemäß ist die mindestens eine Auswerteeinheit eingerichtet, eine vermeintliche Entfernung und/oder vermeintliche relative Geschwindigkeit zwischen erstem und zweitem Objekt aus der Messwertmatrix zu ermitteln, wobei die vermeintliche relative Geschwindigkeit eine Geschwindigkeit ist, mit der sich die Objekte aufeinander zu bewegen oder voneinander weg bewegen, wobei die Ermittlung einer vermeintlichen Entfernung und/oder vermeintlichen relativen Geschwindigkeit zwischen erstem und zweitem Objekt aus der Messwertmatrix durch Vergleich der Messwertmatrix mit einer Menge und/oder Auswahl gespeicherter und/oder errechneter Referenzmesswertmatrizen betreffend unterschiedliche Entfernungen und unterschiedliche relative Geschwindigkeiten, wobei jede Referenzmesswertmatrix einer Entfernung und einer relativen Geschwindigkeit zugeordnet ist, erfolgt, wobei die vermeintliche Entfernung als die Entfernung angenommen wird, die der gespeicherten und/oder errechneten Referenzmesswertmatrix zugeordnet ist, die am besten zu der Messwertmatrix passt, den geringsten Abstand zu ihr aufweist und/oder ihr am ähnlichsten ist und/oder die vermeintliche relative Geschwindigkeit als die Geschwindigkeit angenommen wird, die der gespeicherten und/oder errechneten Referenzmesswertmatrix zugeordnet ist, die am besten zu der Messwertmatrix passt, den geringsten Abstand zu ihr aufweist und/oder ihr am ähnlichsten ist. In Bezug auf Ausgestaltung, Ermittlung und/oder Bereitstellen einzelner Aspekte und/oder Ausgestaltungen, insbesondere in Bezug auf Messwertmatrix, Referenzmesswertmatrizen, Menge und/oder Auswahl gespeicherter und/oder errechneter Referenzmesswertmatrizen, Phaseninformation und/oder erstes und/oder zweites Signal und/oder deren Erzeugung und/oder in Bezug auf Ermittlung einer vermeintlichen Entfernung und/oder vermeintlichen relativen Geschwindigkeit, Ähnlichkeit und/oder Abstand gilt insbesondere oben ausgeführtes entsprechend.

Weitere vorteilhafte Ausbildungen sollen rein exemplarisch anhand der nachfolgenden schematischen Figur geschildert werden.

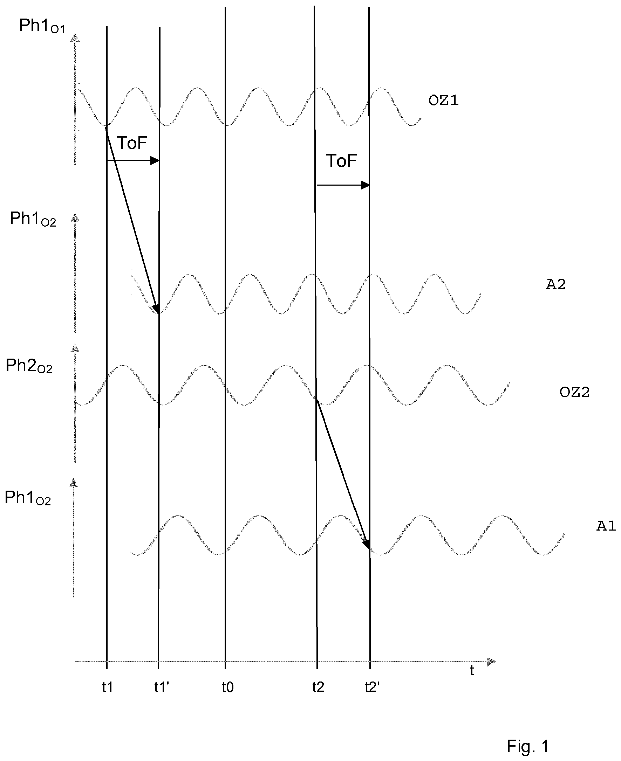

Figur 1 zeigt eine Veranschaulichung der Phasenlagen und Zeiten bei einer Ausführung der Schritte a bis d mit zwei ortsfesten Objekten O1 und O2. Dargestellt sind auf einer gemeinsamen Zeitachse die Phasenlage $Ph1_{O1}$ der Oszillation eines ersten Oszillators OZ1 am ersten Objekt O1 und die Phasenlage $Ph1_{O2}$ des mit einer zweiten Antenne A2 empfangen Signals des ersten Oszillators OZ1 am zweiten Objekt O2 und die Phasenlage $Ph2_{O2}$ der Oszillationen eines zweiten Oszillators OZ2 am zweiten Objekt O2 und die Phasenlage $Ph2_{O1}$ des mit einer ersten Antenne A1 empfangen Signals des zweiten Oszillators OZ2 am ersten Objekt O1.

Die Übertragung ist durch jeweils einen schrägen Pfeil gekennzeichnet, die Flugzeit ToF der Signale ist jeweils mit einem vertikalen Pfeil gekennzeichnet.

t0, t1, t1', t2, t2' stellen Zeitpunkte dar. Zum Zeitpunkt t0 weisen die Oszillatoren einen Phasenversatz von dPht0 auf. Auf Grund unterschiedlicher Frequenzen F1, F2 der Oszillatoren verändert sich der Phasenunterschied im Zeitverlauf.

Nimmt man an, dass (t2 - t1) > > (t1' - t1) und (t2 - t1) > > (t2' - t2), beispielsweise (t2 - t1) > 5 x (t1' - t1) und (t2 - t1) > 5x (t2' - t2) und ergibt sich näherungsweise:

$$Ph1O2(t1') = 2\pi * F * D / c + dPht0 + (t1 - t0) * (F2 - F1)$$

und

$$Ph2O1(t2') = 2\pi * F * D / c - dPht0 + (t2 - t0) * (F1 - F2)$$

wobei D die Entfernung zwischen O1 und O2 darstellt, c die Lichtgeschwindigkeit und Ph1O2(t1') die Phasenlage der Phase des ersten Signals am zweiten Objekt zur Zeit t1' und Ph2O1 (t2') die Phasenlage der Phase des zweiten Signals am ersten Objekt zur Zeit t2' und F den Mittelwert von F1 und F2 (F = min(F1, F2)) darstellt.

Die Addition führt zu

$$Ph1O2 (t1') + Ph2O1(t2') = 2\pi * F * D / c + dPht0 + (t1 - t0) * (F2 - F1) + 2\pi * F * D / c - dPht0 + (t2 - t0) * (F1 - F2)$$

$$Ph1O2 (t1') + Ph2O1 (t2') = 2\pi * F * D / c + (t1 - t0) * (F2 - F1) + 2\pi * F * D / c + (t2 - t0) * (F1 - F2)$$

$$Ph1O2 (t1') + Ph2O1 (t2') = (2\pi * F) * 2 * D / c + (t1 - t0) * (F2 - F1) - (t2 - t0) * (F2 - F1)$$

$$Ph1O2 (t1') + Ph2O1 (t2') = (2\pi * F) * 2 * D / c + (t1 - t0 - t2 + t0) * (F2 - F1)$$

$$Ph1O2 (t1') + Ph2O1 (t2') = (2\pi * F) * 2 * D / c + (t1 - t2) * (F2 - F1)$$

$$2 * D = ((Ph1O2 (t1') + Ph2O1 (t2')) - (t1 - t2) * (F2 - F1)) * c / (2\pi * F)$$

Mit cPhSum als theoretische Phasenlage als Addition erster und zweiter theoretischer Phasenlage als:

$$cPhSum = ((Ph1O2 (t1') + Ph2O1 (t2')) - (t1 - t2) * (F2 - F1))$$

ergibt sich:

$$2 * D = cPhSum * c / (2\pi * F)$$

Unter Verwendung mehrerer Antennenkombinationen erster und zweiter Antennen und vielfacher Ausführung der Schritte a bis d kann eine Messwertmatrix mit komplexen Messzahlen erstellt werden. Durch Bilden der Autokorrelationsmatrix kann eine Messwertmatrix erstellt werden. Unter Verwendung von Referenzmatrizen kann der Abstand und die Geschwindigkeit zwischen den Objekten ermittelt werden.

Dabei lässt sich unter der weiteren Annahme, dass der Frequenzunterschied zwischen zwei Ausführung der Schritte a bis d wesentlich, insbesondere mindestens 5 mal, größer ist als der Frequenzunterschied zwischen dem ersten Signal und dem zweiten Signal der ersten oder jeder Ausführung der Schritte a bis d und wesentlich, insbesondere mindestens 5 mal, größer ist als der Frequenzunterschied zwischen dem ersten Signal und dem zweiten Signal der zweiten Ausführung der Schritte a bis d mit den Frequenzen FA1 und FA2 der ersten Ausführung und den Frequenzen FB1 und FB2 der zweiten Ausführungen anstelle von F1 und F2 oben und mit FA = Mittelwert (FA1, FA2) und FB = Mittelwert (FB1, FB2) und mit

$$2 * D = cPhSum.A * c / (2\pi * FA)$$

$$2 * D = cPhSum.B * c / (2\pi * FB)$$

näherungsweise finden:

$$2 * D = (cPhSum.A - cPhSum.B) * c / (2\pi * (FA - FB))$$

Dabei ist cPhSum.A cPhSum der ersten Ausführung und cPhSum.B cPhSum der zweiten Ausführung.

Sofern man also die Entfernung oder die Frequenzschritte zwischen den Ausführungen der Schritte a bis d ausreichend klein hält, lässt sich auch die $2\pi$ Mehrdeutigkeit vermeiden.

**Patentansprüche**

1. Verfahren zur hochauflösenden Bestimmung einer Entfernung und/oder relativen Geschwindigkeit zwischen einem ersten Objekt (O1) und einem zweiten Objekt (O2), mittels zwischen dem ersten und dem zweiten Objekt übertragender elektromagnetischer Signale, umfassend
vielfaches Ausführen der folgenden Schritte a bis d mit unterschiedlichen ersten (FA1, FB1) und unterschiedlichen zweiten Frequenzen (FA2, FB2):

   a. Senden eines ersten Signals mit einer ersten Frequenz (FA1, FB1) vom ersten Objekt (O1) aus mit mindestens einer ersten Antenne
   b. Empfangen des ersten Signals am zweiten Objekt (O2) mit mindestens einer zweiten Antenne
   c. Senden eines zweiten Signals mit einer zweiten Frequenz (FA2, FB2) vom zweiten Objekt (O2) aus mit der mindestens einen zweiten Antenne
   d. Empfangen des zweiten Signals am ersten Objekt (O1) mit der mindestens einen ersten Antenne und

   Bereitstellen je erstem Signal oder je Ausführung der Schritte a bis d mindestens einer aus oder mittels mindestens einer ermittelten Phasenlage (PH1$_{O2}$) des empfangen ersten Signals ermittelten ersten Phaseninformation und Bereitstellen je zweitem Signal oder je Ausführung der Schritte a bis d mindestens einer aus oder mittels mindestens einer ermittelten Phasenlage (Ph2$_{O1}$) des empfangen zweiten Signals ermittelten zweiten Phaseninformation, **gekennzeichnet durch** die Verfahrensschritte Bilden einer Messwertmatrix aus den ersten und zweiten Phaseninformationen sowie aus mindestens einer Amplitude je erster und/oder zweiter Phaseninformation oder je Ausführung der Schritte a bis d und Ermittlung einer vermeintlichen Entfernung und/oder vermeintlichen relativen Geschwindigkeit zwischen erstem und zweitem Objekt (O1, O2) aus der Messwertmatrix, wobei die vermeintliche relative Geschwindigkeit eine Geschwindigkeit ist, mit der sich die Objekte (O1, O2) aufeinander zu bewegen oder voneinander weg bewegen, wobei die Ermittlung einer vermeintlichen Entfernung und/oder vermeintlichen relativen Geschwindigkeit zwischen erstem und zweitem Objekt (O1, O2) aus der Messwertmatrix durch Vergleich der Messwertmatrix mit einer Menge oder Auswahl gespeicherter und/oder errechneter Referenzmesswertmatrizen betreffend unterschiedliche Entfernungen und unterschiedliche relative Geschwindigkeiten erfolgt, wobei jede Referenzmesswertmatrix einer Entfernung und einer relativen Geschwindigkeit zugeordnet ist, wobei die vermeintliche Entfernung als die Entfernung angenommen wird, die der gespeicherten und/oder errechneten Referenzmesswertmatrix zugeordnet ist, die am besten zu der Messwertmatrix passt, den geringsten Abstand zu ihr aufweist und/oder dieser am ähnlichsten ist und/oder die vermeintliche relative Geschwindigkeit als die relative Geschwindigkeit angenommen wird, die der gespeicherten und/oder errechneten Referenzmesswertmatrix zugeordnet ist, die am besten zu der Messwertmatrix passt, den geringsten Abstand zu ihr aufweist und/oder dieser am ähnlichsten ist.

2.  Verfahren nach einem der vorstehenden Ansprüche, wobei jede erste Phaseninformation gewonnen wird mittels Bestimmung der Frequenzen des jeweiligen ersten Signals und des jeweiligen zweiten Signals am zweiten Objekt (O2) und/oder der Frequenzdifferenz zwischen dem jeweiligen ersten Signal und dem jeweiligen zweiten Signal am zweiten Objekt (O2) und Berechnen einer theoretischen Phasenlage zwischen jeweiligen erstem und jeweiligen zweitem Signal am zweiten Objekt zu einem fiktiven Zeitpunkt je erstem Signal und/oder je Ausführung der Schritte a bis d und/oder wobei jede zweite Phaseninformation gewonnen wird mittels Bestimmung der Frequenzen des jeweiligen zweiten Signals und des jeweiligen ersten Signals am ersten Objekt (O1) und/oder der Frequenzdifferenz zwischen dem jeweiligen zweiten Signal und dem jeweiligen ersten Signal am ersten Objekt (O1) und berechnen einer theoretischen Phasenlage zwischen jeweiligem ersten und jeweiligem zweiten Signal am ersten Objekt(O1) zu dem fiktiven Zeitpunkt je erstem Signal und/oder je Ausführung der Schritte a bis d.

3.  Verfahren nach einem der vorstehenden Ansprüche, wobei die Phaseninformationen Phasenlagen beinhalten oder sind und/oder das Bearbeiten der Messwertmatrix das Addieren und/oder Subtrahieren der ersten und der zweiten Phaseninformation je Ausführung der Schritte a bis d und Halbieren der addierten Phaseninformationen beinhaltet.

4.  Verfahren nach einem der vorstehenden Ansprüche, wobei die Messwertmatrizen die Phaseninformationen und die Amplitude der empfangenen ersten und/oder zweiten Signale beinhalten.

5.  Verfahren nach einem der vorstehenden Ansprüche, wobei die ersten Signale je unterschiedlicher Ausführung der Schritte a bis d entweder gleich in Bezug auf den Signalverlauf,

    die Amplitude, Polarisation und/oder die im Signal aufmodulierte Information oder ungleich und/oder die zweiten Signale je unterschiedlicher Ausführung der Schritte a bis d entweder gleich in Bezug auf den Signalverlauf, die Amplitude, Polarisation und/oder die im Signal aufmodulierte Information ungleich sind und/oder das erste Signal und das zweite Signal innerhalb einer jeden Ausführung der Schritte a bis d bezüglich der Frequenz identisch sind oder zumindest eine gemeinsame Frequenz als erste und zweite Frequenz beinhalten.

6.  Verfahren nach einem der vorstehenden Ansprüche, wobei das Verfahren das Übermitteln und/oder die Nutzung der Frequenzdifferenzen jeweils zwischen der ersten und der zweiten Frequenz am ersten und/oder am zweiten Objekt und/oder der ersten und/oder zweiten Frequenzen am ersten und/oder zweiten Objekt (O1, O2) zur Bearbeitung der Messwertmatrix und/oder zur Ermittlung der vermeintlichen Entfernung und/oder vermeintlichen relativen Geschwindigkeit beinhaltet.

7.  Verfahren nach einem der vorstehenden Ansprüche, wobei die Messwertmatrizen aus mindestens einem Vektor mit komplexen Zahlen gebildet werden.

8.  Verfahren nach einem der vorstehenden Ansprüche, wobei die Messwertmatrix vor dem Vergleich mit den Referenzmesswertmatrizen zur Entfernung und/oder Verringerung der Auswirkungen von Phasensprüngen und/oder Multipathumgebungen und/oder Umwelteinflüssen und/oder Messfehlern und/oder Reduzierung der Dimension der Messwertmatrix bearbeitet wird.

9.  Verfahren nach einem der vorstehenden Ansprüche, wobei die Bearbeitung der Messwertmatrix das Reduzieren der Dimension ist oder beinhaltet.

10. Verfahren nach einem der vorstehenden Ansprüche, wobei die Bearbeitung der Messwertmatrix das Bearbeiten der beinhaltenten Phaseninformation beinhaltet.

11. Verfahren nach einem der vorstehenden Ansprüche, wobei mindestens zwei erste und/oder mindestens zwei zweite Antennen zum Empfang verwendet werden und wobei die ersten Phaseninformation je erstem Signal aus mindestens zwei ermittelten Phasenlagen ($PH1_{02}$) des empfangen ersten Signals besteht und/oder ermittelt wird und/oder die zweite Phaseninformation je zweitem Signal aus mindestens zwei ermittelten Phasenlagen ($Ph2_{01}$) des empfangen zweiten Signals besteht und/oder ermittelt wird.

12. Verfahren nach einem der vorstehenden Ansprüche, wobei ein Testobjekt aus erstem und zweitem Objekt bewegt, gedreht und/oder geschwenkt wird, während die Schritte a bis d vielfach durchgeführt werden und vielfach die vermeintliche relative Geschwindigkeit zwischen dem ersten und zweiten Objekt bestimmt wird.

13. Verfahren nach einem der vorstehenden Ansprüche, wobei die vermeintliche relative Geschwindigkeit kleiner oder gleich ist als ein Viertel der größten Wellenlänge der ersten und zweiten Signale dividiert durch die Zeit zwischen den Enden oder den Anfängen zweier Ausführungen der Schritte a bis d.

14. Verfahren nach einem der vorstehenden Ansprüche, wobei die Frequenzen der ersten Signale und der zweiten Signale einer Ausführung der Schritte a bis d einander angeglichen werden.

15. System zur hochauflösenden Bestimmung einer Entfernung und/oder relativen Geschwindigkeit zwischen einem ersten Objekt (O1) und einem zweiten Objekt (O2), mittels zwischen dem ersten und dem zweiten Objekt übertragender elektromagnetischer Signale, umfassend das erste und das zweite Objekt, wobei das erste Objekt mindestens eine erste Antenne und das zweite Objekt mindestens eine zweite Antenne aufweist umfassend mindestens eine Steuerungsvorrichtung am ersten Objekt und eine Steuerungsvorrichtung am zweiten Objekt und mindestens eine Auswerteeinheit beinhaltend eine CPU und einen Speicher, wobei die erste Steuerungseinrichtung eingerichtet ist zum vielfachen Bewirkens des

   a. Sendens eines ersten Signals mit einer ersten Frequenz (FA1, FB1) vom ersten Objekt (O1) aus mit der mindestens einen ersten Antenne und
   b. Empfangen eines zweiten Signals am ersten Objekt (O1) mit der mindestens einen ersten Antenne
   und wobei die zweite Steuerungseinrichtung eingerichtet ist zum vielfachen Bewirkens des
   c. Senden des zweiten Signals mit einer zweiten Frequenz (FA2, FB2) vom zweiten Objekt (O2) aus mit der mindestens einen zweiten Antenne und
   d. Empfangen des ersten Signals am zweiten Objekt (O2) mit der mindestens einen zweiten Antenne

   und wobei die mindestens eine Auswerteeinheit eingerichtet ist zum Bereitstellen je erstem Signal oder je Ausführung der Schritte a bis d mindestens einer aus oder mittels mindestens einer ermittelten Phasenlage ($PH1_{O2}$) des empfangen ersten Signals ermittelten ersten Phaseninformation und
   Bereitstellen je zweitem Signal oder je Ausführung der Schritte a bis d mindestens einer aus oder mittels mindestens einer ermittelten Phasenlage ($Ph2_{O1}$) des empfangen zweiten Signals ermittelten zweiten Phaseninformation, **dadurch gekennzeichnet, dass** die Auswerteeinheit eingerichtet ist zum Bilden einer Messwertmatrix aus den ersten und zweiten Phaseninformationen sowie aus mindestens einer Amplitude je erster und/oder zweiter Phaseninformation oder je Ausführung der Schritte a bis d und
   zur Ermittlung einer vermeintlichen Entfernung und/oder vermeintlichen relativen Geschwindigkeit zwischen erstem und zweitem Objekt (O1, O2) aus der Messwertmatrix, wobei die vermeintliche relative Geschwindigkeit eine Geschwindigkeit ist, mit der sich die Objekte (O1, O2) aufeinander zu bewegen oder voneinander weg bewegen, wobei die Ermittlung einer vermeintlichen Entfernung und/oder vermeintlichen relativen Geschwindigkeit zwischen erstem und zweitem Objekt (O1, O2) aus der Messwertmatrix durch Vergleich der Messwertmatrix mit einer Menge und/oder Auswahl gespeicherter und/oder errechneter Referenzmesswertmatrizen betreffend unterschiedliche Entfernungen und unterschiedliche relative Geschwindigkeiten, wobei jede Referenzmesswertmatrix einer Entfernung und einer relativen Geschwindigkeit zugeordnet ist, erfolgt, wobei die vermeintliche Entfernung als die Entfernung angenommen wird, die der gespeicherten und/oder errechneten Referenzmesswertmatrix zugeordnet ist, das am besten zu der Messwertmatrix passt, den geringsten Abstand zu ihr aufweist und/oder dieser am ähnlichsten ist und/oder die vermeintliche relative Geschwindigkeit als die relative Geschwindigkeit angenommen wird, die der gespeicherten und/oder errechneten Referenzmesswertmatrix zugeordnet ist, das am besten zu der Messwertmatrix passt, den geringsten Abstand zu ihr aufweist und/oder dieser am ähnlichsten ist.

**Claims**

1. A method for high-resolution determination of a range and/or relative velocity between a first object (01) and a second object (02) by means of electromagnetic signals transmitted between the first and the second object, comprising:

   carrying out the following steps a to d several times with different first (FA1, FB1) and different second frequencies (FA2, FB2):

a. transmitting a first signal with a first frequency (FA1, FB1) from the first object (01) with at least a first antenna

b. receiving the first signal at the second object (02) with at least a second antenna

c. transmitting a second signal with a second frequency (FA2, FB2) from the second object (02) with the at least one second antenna

d. receiving the second signal at the first object (01) with the at least one first antenna and

providing, per first signal or per execution of steps a to d, at least one item of first phase information determined from or by means of at least one determined phase position (PHI02) of the received first signal, and

provision per second signal or per execution of steps a to d of at least one item of second phase information determined from or by means of at least one determined phase position (Ph2oi) of the received second signal, **characterised by** the method steps:

forming a measured value matrix from the first and second phase information and from at least one amplitude per first and/or second phase information or per execution of steps a to d and

determining an alleged range and/or alleged relative velocity between first and second object (01, 02) from the measurement value matrix, wherein the alleged relative velocity is a velocity at which the objects (01, 02) move towards or away from each other, wherein the determination of an alleged range and/or alleged relative velocity between first and second object (01, 02) from the measurement value matrix is performed by comparing the measurement value matrix with a set or selection of stored and/or calculated reference measurement value matrices concerning different ranges and different relative velocities, each reference measurement matrix being associated with a range and a relative velocity, the supposed range being assumed to be the c range associated with the stored and/or calculated reference measurement matrix which best matches the measurement matrix, is assumed to be the relative velocity associated with the stored and/or calculated reference measurement matrix which best matches, has the smallest range to and/or is most similar to the measurement matrix.

2. A method according to any one of the preceding claims, wherein each first phase information is obtained by means of determining the frequencies of the respective first signal and the respective second signal at the second object (02) and/or the frequency difference between the respective first signal and the respective second signal at the second object (O2) and calculating a theoretical phase position between the respective first and the respective second signal at the second object at a fictitious point in time per first signal and/or per execution of the steps a to d and/or wherein each second phase information is obtained by means of determining the frequencies of the respective second signal and the respective first signal at the first object (01) and/or the frequency difference between the respective second signal and the respective first signal at the first object (01) and calculating a theoretical phase position between respective first and respective second signals at the first object (01) at the notional time per first signal and/or per execution of steps a to d.

3. A method according to any one of the preceding claims, wherein the phase information includes or is phase positions and/or the processing of the measurement matrix includes adding and/or subtracting the first and second phase information per execution of steps a to d and halving the added phase information.

4. A method according to any one of the preceding claims, wherein the measurement matrices include the phase information and the amplitude of the received first and/or second signals.

5. A method according to one of the preceding claims, wherein the first signals, depending on the different execution of steps a to d, are either equal with respect to the signal characteristic, the amplitude, polarisation and/or the information modulated in the signal or unequal and/or the second signals, depending on the different execution of steps a to d, are either equal with respect to the signal characteristic, the amplitude, polarisation and/or the information modulated in the signal or unequal and/or the first signal and the second signal within each execution of steps a to d are identical with respect to the frequency or contain at least one common frequency as the first and second frequency.

6. A method according to any one of the preceding claims, the method comprising transmitting and/or using the frequency differences respectively between the first and second frequencies at the first and/or second object and/or the first and/or second frequencies at the first and/or second object (O1,O2) to process the measurement matrix and/or to determine the alleged range and/or alleged relative velocity.

7. A method according to any of the preceding claims, wherein the measured value matrices are formed from at least one vector with complex numbers.

8. A method according to any one of the preceding claims, wherein the measurement matrix is processed to remove and/or reduce the effects of phase jumps and/or multipath environments and/or environmental influences and/or measurement errors and/or reduce the dimension of the measurement matrix prior to comparison with the reference measurement matrices.

9. A method according to any one of the preceding claims, wherein processing the measurement matrix is or includes reducing the dimension.

10. A method according to any one of the preceding claims, wherein the processing of the measured value matrix includes processing the included phase information.

11. A method according to one of the preceding claims, wherein at least two first and/or at least two second antennas are used for reception and wherein the first phase information per first signal consists of and/or is determined from at least two determined phase positions ($PH1_{02}$) of the received first signal and/or the second phase information per second signal consists of and/or is determined from at least two determined phase positions ($Ph2_{01}$) of the received second signal.

12. A method according to any one of the preceding claims, wherein a test object of first and second objects is moved, rotated and/or pivoted while performing steps a to d a plurality of times and a plurality of times the apparent relative velocity between the first and second objects is determined.

13. A method according to any one of the preceding claims, wherein the apparent relative velocity is less than or equal to one quarter of the longest wavelength of the first and second signals divided by the time between the ends or the beginnings of two executions of steps a-d.

14. A method according to any one of the preceding claims, wherein the frequencies of the first signals and the second signals of an execution of steps a to d are aligned.

15. System for high-resolution determination of a range and/or relative velocity between a first object (O1) and a second object (O2) by means of electromagnetic signals transmitted between the first and the second object, comprising the first and the second object, the first object having at least one first antenna and the second object having at least one second antenna, comprising at least one control device on the first object and a control device on the second object and at least one evaluation unit containing a CPU and a memory, the first control device being set up for multiple operation of the first and the second object.

    a. transmitting a first signal with a first frequency (FA1, FB1) in front of the first object (01) from the at least one first antenna; and
    b. receiving a second signal at the first object (01) with the at least one first antenna
    and wherein the second control means is arranged to effect the multiple
    c. transmitting the second signal with a second frequency (FA2, FB2) from the second object (O2) with the at least one second antenna and
    d. receiving the first signal at the second object (O2) with the at least one second antenna

and wherein the at least one evaluation unit is set up to provide, for each first signal or for each execution of steps a to d, at least one item of first phase information determined from or by means of at least one determined phase position ($PH1_{02}$) of the received first signal, and to provide, for each second signal or for each execution of steps a to d, at least one item of second phase information determined from or by means of at least one determined phase position ($Ph2_{01}$) of the received second signal, **characterised in that in that** the evaluation unit is set up to form a measured value matrix from the first and second phase information and from at least one amplitude per first and/or second phase information or per execution of steps a to d and to determine an assumed range and/or assumed relative velocity between the first and second objects (O1, O2) from the measured value matrix, the assumed relative velocity being a velocity at which the objects (O1, O2) move towards one another or away from one another, wherein the determination of an alleged range and/or alleged relative velocity between the first and second object (O1, O2) from the measurement value matrix is effected by comparison of the measurement value matrix with a set and/or selection of stored and/or calculated reference measurement value matrices relating to different ranges and different relative velocities, wherein each reference measurement value matrix is associated with a range and a relative velocity, wherein the alleged range is assumed to be the range, the presumed range is assumed to be the range associated with the stored and/or calculated reference measurement matrix which best matches, is the smallest range from and/or is the most similar to the measurement matrix and/or the presumed relative velocity is assumed to be the relative velocity associated with the stored and/or calculated reference measurement matrix which best matches, is the smallest range from and/or is the most similar to the measurement matrix.

**Revendications**

1. Procédé de détermination à haute résolution d'une distance et/ou d'une vitesse relative entre un premier objet (01) et un deuxième objet (02) au moyen de signaux électromagnétiques transmis entre le premier et le deuxième objet, comprenant:

la répétition des étapes a à d suivantes fois avec des premières fréquences différentes (FA1, FB1) et des deuxièmes fréquences différentes (FA2, FB2):

a. l'émission d'un premier signal avec une première fréquence (FA1, FB1) à partir du premier objet (01) avec au moins une première antenne;
b. la réception du premier signal au niveau du deuxième objet (02) avec au moins une deuxième antenne;
c. l'émission d'un deuxième signal avec une deuxième fréquence (FA2, FB2) à partir du deuxième objet (O2) avec au moins une deuxième antenne;
d. la réception du deuxième signal au niveau du premier objet (01) avec au moins une première antenne et

la fourniture, par premier signal ou par exécution des étapes a à d, au moins un élément d'information de première phase déterminé à partir ou au moyen d'au moins une position de phase déterminée (PHI02) du premier signal reçu, et
la fourniture par deuxième signal ou par exécution des étapes a à d d'au moins une information de deuxième phase déterminée à partir ou au moyen d'au moins une position de phase déterminée (Ph2oi) du deuxième signal reçu, **caractérisé par** les étapes siuvantes du procédé:

la formation d'une matrice de valeurs mesurées à partir des informations de la première et de la deuxième phase et d'au moins une amplitude par information de la première et/ou de la deuxième phase ou par exécution des étapes a à d et
la détermination d'une distance présumée et/ou une vitesse relative présumée entre un premier et un deuxième objet (01, 02) à partir de la matrice de valeurs de mesure, dans laquelle la vitesse relative présumée est une vitesse à laquelle les objets (01, 02) se rapprochent ou s'éloignent l'un de l'autre, dans laquelle la détermination d'une distance présumée et/ou d'une vitesse relative présumée entre un premier et un deuxième objet (01, 02) à partir de la matrice de valeurs de mesure est effectuée en comparant la matrice de valeurs de mesure avec un ensemble ou une sélection de matrices de valeurs de mesure de référence stockées et/ou calculées concernant différentes distances et différentes vitesses relatives, chaque matrice de mesure de référence étant associée à une plage et à une vitesse relative, la plage supposée étant la plage c associée à la matrice de mesure de référence stockée et/ou calculée qui correspond le mieux à la matrice de mesure, est supposée être la vitesse relative associée à la matrice de mesure de référence stockée et/ou calculée qui correspond le mieux à la matrice de mesure, a la plus petite plage par rapport à celle-ci et/ou lui est la plus similaire.

2. Procédé selon l'une des revendications précédentes, dans lequel chaque information de la première phase est obtenue par la détermination de la fréquence du premier signal respectif et du deuxième signal respectif au niveau du deuxième objet (02) et/ou la différence de fréquence entre le premier signal respectif et le deuxième signal respectif au niveau du deuxième objet (02) et le calcul d'une position de phase théorique entre le premier signal respectif et le deuxième signal respectif au niveau du deuxième objet à un moment fictif par premier signal et/ou par exécution des étapes a à d et/ou dans lequel chaque deuxième phase des informations sont obtenues en déterminant les fréquences du deuxième signal respectif et du premier signal respectif au niveau du premier objet (01) et/ou la différence de fréquence entre le deuxième signal respectif et le premier signal respectif au niveau du premier objet (01) et en calculant une position de phase théorique entre le premier signal respectif et le deuxième signal respectif au niveau du premier objet (01) au moment théorique par premier signal et/ou par exécution des étapes a à d.

3. Procédé selon l'une quelconque des revendications précédentes, dans lequel les informations de phase comprennent ou sont des positions de phase et/ou le traitement de la matrice de mesure comprend l'addition et/ou la soustraction des premières et deuxièmes informations de phase par exécution des étapes a à d et la réduction de moitié des informations de phase ajoutées.

4. Procédé selon l'une des revendications précédentes, dans lequel les matrices de mesure comprennent les informations de phase et l'amplitude des premiers et/ou deuxièmes signaux reçus.

5. Procédé selon l'une des revendications précédentes, dans lequel les premiers signaux, en fonction de l'exécution différente des étapes a à d, sont soit égaux en ce qui concerne la caractéristique du signal, l'amplitude, la polarisation et/ou l'information modulée dans le signal, soit inégaux et/ou les deuxièmes signaux, en fonction de l'exécution différente des étapes a à d, sont soit égaux en ce qui concerne la caractéristique du signal, l'amplitude, la polarisation et/ou les informations modulées dans le signal, soit inégaux et/ou le premier signal et le deuxième signal dans chaque exécution des étapes a à d sont identiques en ce qui concerne la fréquence ou contiennent au moins une fréquence commune comme première et deuxième fréquence.

6. Procédé selon l'une quelconque des revendications précédentes, le procédé comprenant la transmission et/ou l'utilisation des différences de fréquence respectivement entre les première et deuxième fréquences au niveau du premier et/ou du deuxième objet et/ou les première et/ou deuxième fréquences au niveau du premier et/ou du deuxième objet (01,02) pour traiter la matrice de mesure et/ou pour déterminer la portée présumée et/ou la vitesse relative présumée.

7. Procédé selon l'une des revendications précédentes, dans lequel les matrices de valeurs mesurées sont formées à partir d'au moins un vecteur avec des nombres complexes.

8. Procédé selon l'une des revendications précédentes, dans lequel la matrice de mesure est traitée pour éliminer et/ou réduire les effets des sauts de phase et/ou des environnements à trajets multiples et/ou des influences environnementales et/ou des erreurs de mesure et/ou réduire la dimension de la matrice de mesure avant la comparaison avec les matrices de mesure de référence.

9. Procédé selon l'une des revendications précédentes, dans lequel le traitement de la matrice de mesure est ou comprend la réduction de la dimension.

10. Procédé selon l'une des revendications précédentes, dans lequel le traitement de la matrice des valeurs mesurées comprend le traitement des informations de phase incluses.

11. Procédé selon l'une des revendications précédentes, dans lequel au moins deux premières et/ou au moins deux deuxièmes antennes sont utilisées pour la réception et dans lequel la première information de phase par premier signal consiste en et/ou est déterminée à partir d'au moins deux positions de phase déterminées ($PH1_{02}$) du premier signal reçu et/ou la deuxième information de phase par deuxième signal consiste en et/ou est déterminée à partir d'au moins deux positions de phase déterminées ($Ph2_{01}$) du deuxième signal reçu.

12. Procédé selon l'une quelconque des revendications précédentes, dans lequel un objet test constitué d'un premier et d'un deuxième objet est déplacé, tourné et/ou pivoté tout en effectuant les étapes a à d une pluralité de fois et une pluralité de fois la vitesse relative apparente entre le premier et le deuxième objet est déterminée.

13. Procédé selon l'une des revendications précédentes, dans lequel la vitesse relative apparente est inférieure ou égale à un quart de la longueur d'onde la plus longue des premier et deuxième signaux divisée par le temps entre les fins ou les débuts de deux exécutions des étapes a-d.

14. Procédé selon l'une des revendications précédentes, dans lequel les fréquences des premiers signaux et des deuxièmes signaux d'une exécution des étapes a à d sont alignées.

15. Système pour la détermination à haute résolution d'une distance et/ou d'une vitesse relative entre un premier objet (01) et un deuxième objet (O2) au moyen de signaux électromagnétiques transmis entre le premier et le deuxième objet, comprenant le premier et le deuxième objet, le premier objet ayant au moins une première antenne et le deuxième objet ayant au moins une deuxième antenne, comprenant au moins un dispositif de commande sur le premier objet et un dispositif de commande sur le deuxième objet et au moins une unité d'évaluation contenant une unité centrale et une mémoire, le premier dispositif de commande étant configuré pour un fonctionnement multiple du premier et du deuxième objet.

a. l'émission d'un premier signal avec une première fréquence (FA1, FB1) devant le premier objet (O1) à partir d'au moins une première antenne; et

b. la réception d'un deuxième signal au niveau du premier objet (01) avec au moins une première antenne et dans lequel le deuxième moyen de contrôle est agencé pour effectuer le multiple

c. la transmission du deuxième signal avec une deuxième fréquence (FA2, FB2) à partir du deuxième objet (O2) avec au moins une deuxième antenne et

d. la réception du premier signal au niveau du deuxième objet (O2) avec au moins une deuxième antenne

et dans lequel la au moins une unité d'évaluation est mise en place pour fournir, pour chaque premier signal ou pour chaque exécution des étapes a à d, au moins un élément d'information de première phase déterminé à partir ou au moyen d'au moins une position de phase déterminée ($PH1_{02}$) du premier signal reçu, et pour fournir, pour chaque deuxième signal ou pour chaque exécution des étapes a à d, au moins un élément d'information de deuxième phase déterminé à partir ou au moyen d'au moins une position de phase déterminée ($Ph2_{01}$) du deuxième signal reçu, **caractérisé en ce que** l'unité d'évaluation est conçue pour former une matrice de valeurs de mesure à partir des première et deuxième informations de phase et d'au moins une amplitude par première et/ou deuxième information de phase ou par exécution des étapes a à d et pour déterminer une distance supposée et/ou une vitesse relative supposée entre les premier et deuxième objets (O1, O2) à partir de la matrice de valeurs de mesure, la vitesse relative supposée étant une vitesse à laquelle les objets (O1, O2) se rapprochent ou s'éloignent l'un de l'autre, dans lequel la détermination d'une distance présumée et/ou d'une vitesse relative présumée entre le premier et le deuxième objet (O1, O2) à partir de la matrice de valeurs de mesure est effectuée par comparaison de la matrice de valeurs de mesure avec un ensemble et/ou une sélection de matrices de valeurs de mesure de référence stockées et/ou calculées concernant différentes distances et différentes vitesses relatives, dans lequel chaque matrice de valeurs de mesure de référence est associée à une distance et à une vitesse relative, dans laquelle la plage présumée est supposée être la plage, la plage présumée est supposée être la plage associée à la matrice de mesure de référence stockée et/ou calculée qui correspond le mieux, est la plus petite plage à partir de et/ou est la plus similaire à la matrice de mesure et/ou la vitesse relative présumée est supposée être la vitesse relative associée à la matrice de mesure de référence stockée et/ou calculée qui correspond le mieux, est la plus petite plage à partir de et/ou est la plus similaire à la matrice de mesure.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2196823 A
- DE 102009060592 A1